# EUROPÄISCHE PATENTSCHRIFT

(11) **EP 1 042 336 B1**
(45) Veröffentlichungstag und Bekanntmachung des Hinweises auf die Patenterteilung: **03.04.2002**
(21) Anmeldenummer: 98966295.2
(22) Anmeldetag: 10.12.1998
(51) Int. Cl.: C07F 17/00, C08F 10/02

(54) **PI-KOMPLEX-VERBINDUNGEN**
PI-COMPLEX COMPOUNDS
COMPOSES COMPLEXES DE TYPE PI

(30) Priorität: 23.12.1997 DE 19757524
(43) Veröffentlichungstag der Anmeldung: 11.10.2000
(73) Patentinhaber: Bayer Aktiengesellschaft, 51368 Leverkusen (DE)
(72) Erfinder: OSTOJA-STARZEWSKI, Karl-Heinz, Aleksander, D-61118 Bad Vilbel (DE); KELLY, Warren, Mark, Airdrie, Alberta T4A 2B3 (CA); SCHERTL, Peter, D-51373 Leverkusen (DE)
(86) Internationale Anmeldenummer: EP9808074
(87) Internationale Veröffentlichungsnummer: WO9933852

(56) Entgegenhaltungen:
- EP-A- 0 416 815

## Beschreibung

Die vorliegende Erfindung bezieht sich auf π-Komplex-Verbindungen von Übergangsmetallen, die nur einen π-Liganden besitzen (Halbsandwich-Struktur) und die eine Donor-Akzeptor-Bindung aufweisen, wobei die Donorgruppe oder die Akzeptorgruppe an das Übergangsmetall gebunden ist. Die zwischen dem Donoratom und dem Akzeptoratom bestehende koordinative Bindung erzeugt in der Donorgruppe eine positive (Teil)Ladung und in der Akzeptorgruppe eine negative (Teil)Ladung:

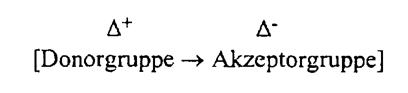

Die Erfindung bezieht sich weiterhin auf ein Verfahren zur Herstellung solcher π-Komplex-Verbindungen von Übergangsmetallen und auf ihre Verwendung als Katalysatoren in Verfahren zur Homo- oder Copolymerisation von Monomeren.

Als π-Komplex-Verbindungen von Übergangsmetallen sind Metallocene bekannt und ebenso ihr Einsatz als Katalysatoren bei der Polymerisation von Olefinen (EP-A 129 368 und die darin zitierte Literatur). Aus EP-A 129 368 ist weiterhin bekannt, daß solche Metallocene in Kombination mit Aluminiumalkyl/Wasser als Cokatalysatoren wirksame Systeme für die Polymerisation von Ethylen darstellen. So wird beispielsweise aus ca. 1 mol Trimethylaluminium und 1 mol Wasser Methylaluminoxan = MAO gebildet; auch andere stöchiometrische Verhältnisse wurden bereits erfolgreich angewandt (WO 94/20 506). In solchen Metallocenen wurden deren Cyclopentadienylgerüste miteinander durch eine Brücke kovalent verknüpft. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt. Auch die verbrückten Metallocene von EP-A 704 461 sind als Polymerisationskatalysatoren vorgesehen. Es sind auch bereits als Polymerisationskatalysatoren geeignete π-Komplex-Verbindungen bekannt, die nur einen π-Liganden aufweisen. Genannt seien beispielsweise: EP 416 815; US 5,453,410; US 5,470,993; WO 91/04257, WO 96/13 529 und US 5,453,475. In den darin beschriebenen Halbsandwich-Strukturen werden Bindungen zu einem zentralen Übergangsmetall einerseits von einem Cyclopentadienyl-Anion und andererseits von einem Heteroatom hergestellt, die beide durch eine Brückengruppierung kovalent miteinander verbunden sind. Hieraus resultiert eine erzwungene, gespannte geometrische Struktur solcher Katalysatoren (CGC = Constrained Geometry Catalysts).

Katalysatoren der zuletzt genannten Art befinden sich außerhalb des Rahmens der vorliegenden Erfindung.

Trotz der zahlreichen Patente und Anmeldungen auf diesem Gebiet besteht weiterhin der Wunsch nach verbesserten Katalysatoren, die sich durch spezielle Eigenschaften und durch hohe Aktivität auszeichnen, so daß die Menge des im Polymer verbleibenden Katalysators gering bleiben kann.

Es wurde nun gefunden, daß sich besonders vorteilhafte Katalysatoren aus π-Komplex-Verbindungen von Übergangsmetallen herstellen lassen, die nur einen π-Liganden aufweisen und die eine Donor-Akzeptor-Bindungen enthalten, in denen jeweils zwischen dem Donoratom und dem Akzeptoratom eine koordinative oder sogenannte dative Bindung entsteht, der zumindest formal eine ionische Bindung überlagert ist, wobei die Donorgruppe oder die Akzeptorgruppe an das Zentralmetall gebunden ist. Die erfindungsgemäßen π-Komplex-Verbindungen umfassen mindestens zwei Teilstrukturen, je nachdem, ob das Donoratom D oder das Akzeptoratom A dem einzigen π-Liganden zugeordnet ist.

Die Erfindung betrifft demnach n-Komplex-Verbindungen von Übergangsmetallen der Formeln 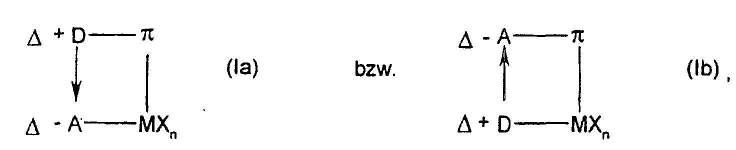 worin
- π: ein geladenes oder elektrisch neutrales π-System darstellt, das ein- oder zweifach mit ungesättigten oder gesättigten Fünf- oder Sechsringen kondensiert sein kann und dessen H-Atome in der kondensierten oder nicht-kondensierten Form teilweise oder vollständig durch gleiche oder verschiedene Reste aus der Gruppe von nicht verzweigten oder verzweigtem C₁-C₂₀-(Cyclo)Alkyl, C₁-C₂₀-Halogen(cyclo)alkyl, C₂-C₂₀-(Cyclo)Alkenyl, C₁-C₂₀-(Cyclo)Alkoxy, C₇-C₁₅-Aralkyl, C₆-C₁₂-Aryl oder ein- oder zweifach durch D oder A ersetzt sein können,
- D: ein Donoratom bedeutet, das im Falle der Teilstruktur (Ia) Substituent oder Teil des π-Systems ist oder über einen Spacer mit dem π-System verbunden ist und im Falle der Teilstruktur (Ib) an das Übergangsmetall gebunden ist,
- A: ein Akzeptoratom bedeutet, das im Falle der Teilstruktur (Ia) an das Übergangsmetall gebunden ist und im Falle der Teilstruktur (Ib) Substituent oder Teil des π-Systems ist oder über einen Spacer mit dem π-System verbunden ist,
wobei die Anbindung von D bzw. A an das Übergangsmetall entweder direkt oder über einen Spacer erfolgt, wobei D und A über eine koordinative Bindung derart verknüpft sind, daß das Donoratom eine positive (Teil)Ladung und das Akzeptoratom eine negative (Teil)Ladung annehmen und wobei D und A ihrerseits Substituenten tragen können,
- M: für ein Übergangsmetall der III. bis VIII. Nebengruppe des Periodensystems der Elemente (Mendelejew) einschließlich der Lanthaniden und der Actiniden, bevorzugt der III. bis VI. Nebengruppe einschließlich der Lanthaniden und Ni, steht,
- X: ein Anionenäquivalent bedeutet und
- n: in Abhängigkeit von den Ladungen von M und von π die Zahl Null, Eins, Zwei, Drei oder Vier bedeutet
und wobei D und A im einzelnen wie folgt definiert sind:
i) im Rahmen der Formel (Ia) bedeuten
   - D: über einen Spacer oder direkt an π gebundenen zweifach substituierten N, P, As, Sb der Bi oder einfach oder zweifach substituierten O, S, Se oder Te und
   - A: über einen Spacer oder direkt an M gebundenes B, Al, Ga oder In: oder
ii) im Rahmen der Formel (Ia) bedeuten D und A gemeinsam eine der über Spacer oder direkt an π bzw. M gebundenen Gruppen 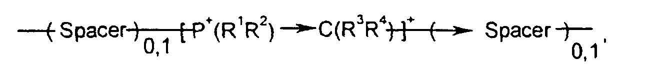 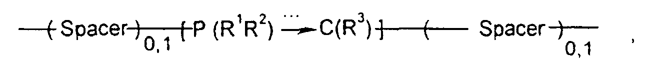 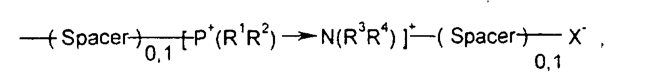 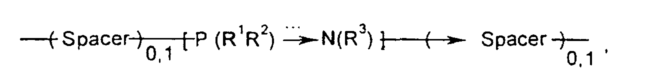 oder 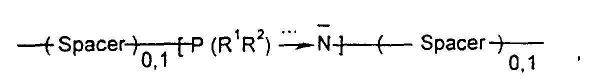 die Phosphoniumsalze, Phosphorylide, Aminophosphoniumsalze und Phosphinimine darstellen,
   oder die entsprechenden Ammoniumsalze und Stickstoffylide, Arsoniumsalze und Arsenylide, Sulfoniumsalze und Schwefelylide, Seleniumsalze und Selenylide, die entsprechenden Aminoarsoniumsalze und Arsinimine, Aminosulfoniumsalze und Sulfimine, Aminoseleniumsalze und Selenimine, 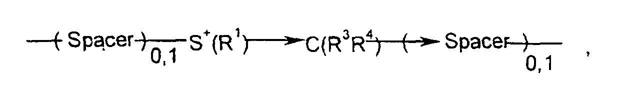 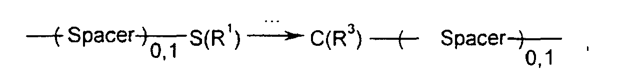 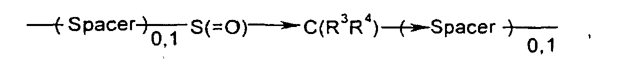 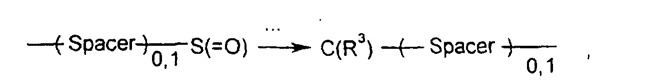 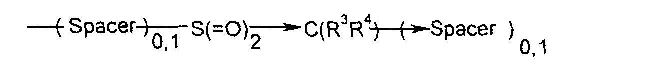 und die entsprechenden Sulfiminstrukturen; oder
iii) im Rahmen der Formel (Ib) bedeuten
   - D: über einen Spacer oder direkt an M gebundenen zweifach substituierten N, P, As, Sb oder Bi oder einfach oder zweifach substituierten O, S, Se oder Te und
   - A: über einen Spacer oder direkt an π gebundenes zweifach substituiertes Al, Ga oder In oder über einen Spacer an π gebundenes zweifach substituiertes B;
   wobei R¹, R², R³ oder R⁴ und der Begriff "substituiert" unabhängig voneinander C₁-C₂₀-(Cyclo)-alkyl, C₁-C₂₀-Halogen-(cyclo)alkyl, C₂-C₂₀-(Cyclo)alkenyl, C₇-C₁₅-Aralkyl, C₆-C₁₂-Aryl, C₁-C₂₀-(Cyclo)alkoxy, C₇-C₁₅-Aralkoxy, C₆-C₁₂-Aryloxy, Indenyl, Halogen, 1-Thienyl, disubstituiertes Amino, trisubstituiertes Silyl, das über -CH₂-angebunden sein kann, oder Phenyl-acetylenyl bedeuten und "Spacer" eine zweibindige Silyl-, Germanyl-, Amino-, Phosphino-, Methylen-, Ethylen-, Propylen-, Disilylethylen- oder Disiloxangruppe bedeutet, die 1- bis 4fach durch C₁-C₄-Alkyl, Phenyl oder C₄-C₆-Cycloalkyl substituiert sein kann, und das Element P, N, As, S bzw. Se über den Spacer oder direkt an π gebunden ist; und wobei in dem Fall, daß D Teil des π-Systems ist, zwischen A und M ein Spacer angeordnet ist und wobei in den Fällen i) und ii) als Spacer auch -C(R¹)= auftritt.

Wichtige Strukturen, die unter die Formeln (Ia) und (Ib) fallen, sind folgende, die lediglich beispielhaft und nicht erschöpfend aufgeführt sind:

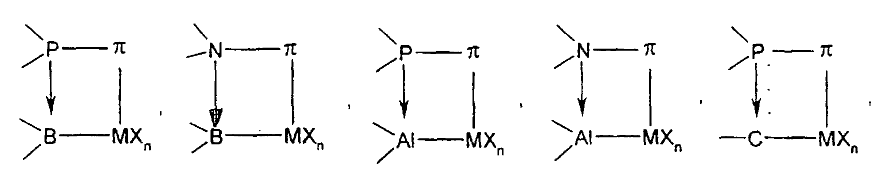

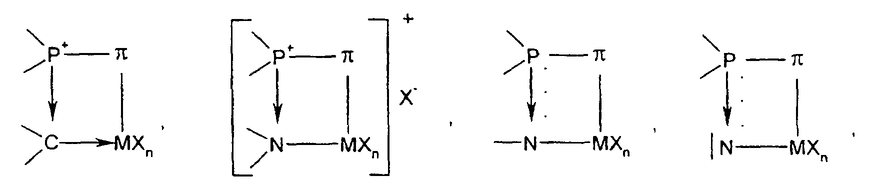

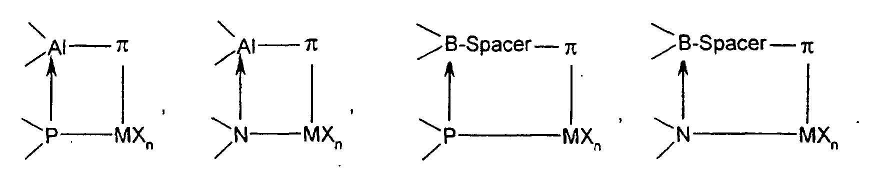

Bevorzugte Strukturen sind solche ohne Spacer mit Ausnahme von Strukturen, in denen D Teil des π-Systems ist, die stets einen Spacer zwischen A und M enthalten. Bevorzugt sind weiter Strukturen der Teilformel (Ia).

Die erfindungsgemäßen π-Komplex-Verbindungen von Übergangsmetallen der oben dargestellten Art (Ia bzw. Ib) im Rahmen von i) bzw. iii) können beispielsweise in fachmännisch bekannter Weise so hergestellt werden, daß man im Falle der Teilstruktur der Formel (Ia) entweder je eine Verbindung der Formeln (II) und (III) 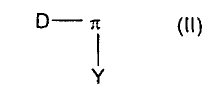 und

A-MXₙ₊₁ (III)

unter Austritt der Verbindung YX (IV)
oder je eine Verbindung der Formeln (V) und (VI) 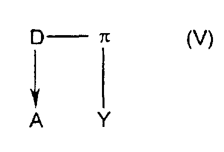 und

MXₙ₊₁ (VI)

unter Austritt der Verbindung YX (IV)
oder je eine Verbindung der Formeln (VII) und (VIII) 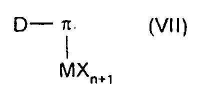 und

AY (VIII)

unter Austritt der Verbindung YX (IV)
und im Falle der Teilstruktur der Formel (Ib)
entweder je eine Verbindung der Formeln (IX) und (X) 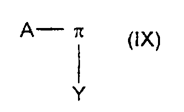 und

D-MXₙ₊₁ (X)

unter Austritt der Verbindung YX (IV)
oder je eine Verbindung der Formeln (XI) und (VI) 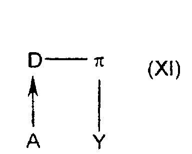 und

MXₙ₊₁ (VI)

unter Austritt der Verbindung YX (IV)
oder je eine Verbindung der Formeln (XII) und (XIII) 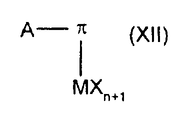 und

DY (XIII)

unter Austritt der Verbindung YX (IV)
in Gegenwart oder in Abwesenheit eines aprotischen Lösungsmittels miteinander umsetzt, wobei
- π, D, A, M, X und n: die oben angegebene Bedeutung haben und
- Y: für Si(R¹R²R³), Ge(R¹R²R³) oder Sn(R¹R²R³) steht, worin R¹, R² und R³ unabhängig voneinander geradkettiges oder verzweigtes C₁-C₂₀-(Cyclo)-Alkyl, C₁-C₂₀-Halogen(cyclo)alkyl, C₂-C₂₀-(Cyclo)Alkenyl, C₇-C₁₅-Aralkyl, C₆-C₁₂-Aryl, Vinyl, Allyl oder Halogen bedeuten, und wobei Y für den Fall, daß π eine negative Ladung trägt, auch ein Kationenäquivalent eines (Erd)Alkalimetalls oder des Thalliums sein kann und wobei Y auch Wasserstoff sein kann, wenn X ein Amidanion vom Typ R₂N⁻, ein Carbanion vom Typ R₃C⁻ oder ein Alkoholatanion vom Typ RO⁻ ist.

Die Herstellung von π-Komplex-Verbindungen im Rahmen von ii) von Formel (Ia) mit den darin enthaltenen Oniumsalzen, Yliden, Amino-oniumsalzen und Iminen erfolgt gleichfalls in fachmannisch bekannter Weise (A.W. Johnson, W.C. Kaska, K.A. Ostoja Starzewski, D.A. Dixon, Ylides and Imines of Phosphorus, John Wiley and Sons, Inc., New York 1993): Phosphoniumsalze lassen sich durch Quaternierung von Phosphinen mit Organylhalogeniden erhalten. Dehydrohalogenierung mit Basen führt bei einer ca. 1:1-Stöchiometrie zu Phosphoryliden. Umsetzung mit weiteren Äquivalenten Base (z.B. Butyl-Lithium) ergibt unter Butan-Freisetzung das YlidAnion

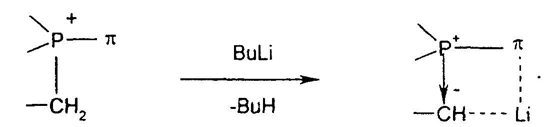

Die Weiterreaktion mit MXₙ führt unter Abspaltung von LiX zu dem erfindungsgemäßen D-A-Halbsandwichkomplex

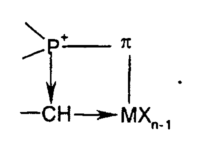

Ein weiteres Äquivalent Base liefert unter Dehydrohalogenierung schließlich

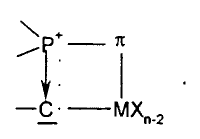

Zur Herstellung der isoelektronischen (P → N)-Derivate kann man in analoger Weise von den Aminophosphoniumsalzen ausgehen oder man geht von einem Donor-substituierten Halbsandwich-Komplex aus wie z.B. 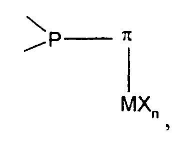 welches mit Organylamin und Tetrachlorkohlenstoff 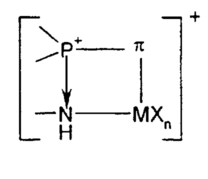 ergibt. Anschließende Deprotonierung ergibt im ersten Schritt 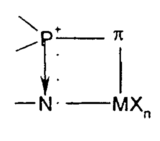 (welches auch aus dem P-substituierten Halbsandwichkomplex durch Umsetzung mit Organylaziden oder Triorganylsilylaziden mit anschließender N₂-Abspaltung entsteht) und mit weiterer Base und für den Fall, daß der Stickstoff ein H-Atom trägt,

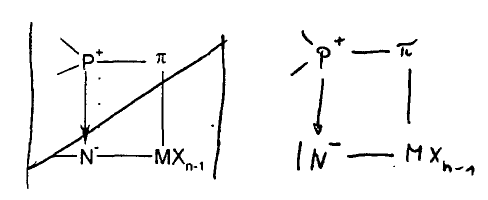

Die Erfindung betrifft weiterhin die Verwendung der π-Komplex-Verbindungen von Übergangsmetallen der oben dargestellten Art (la bzw. lb) als Katalysatoren in Verfahren zur Homo- oder Copolymerisation von Monomeren aus der Gruppe der C₂-C₁₂-α-Olefine, der C₄-C₃₀-Cycloolefine, der C₂-C₈Alkine, der C₄-C₈-Diolefine, der C₄-C₈-Vinylester und der C₈-C₁₂-Vinylaromaten, in der Gas-, Lösungs-, Hochtemperaturlösungs-, Masse-, Hochdruck- oder Slurry-Phase bei -60°C bis +250°C und 0,5 bis 5000 bar und in Gegenwart oder Abwesenheit von gesättigten oder aromatischen Kohlenwasserstoffen oder von gesättigten oder aromatischen Halogenkohlenwasserstoffen sowie in Gegenwart oder Abwesenheit von Wasserstoff, wobei die π-Komplex-Verbindungen in einer Menge von 10⁻¹² bis 10⁻¹ mol pro mol Monomere eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann.

Das Donoratom D ist ein Element der V, oder VI. Hauptgruppe des Periodensystems der Elemente (Mendelejew) und verfügt in seinem jeweiligen Bindungszustand über mindestens ein freies Elektronenpaar. Donoratome sind beispielsweise N, P, As, Sb, Bi, O, S, Se und Te, bevorzugt N, P, As, O, S und Se, besonders bevorzugt N, P und O. Donoratome im Falle von Elementen der V. Hauptgruppe befinden sich in einem Bindungszustand mit Substituenten und können sich im Fall von Elementen der VI. Hauptgruppe in einem solchen befinden. Dies wird am Beispiel von Phosphor, Sauerstoff als Donoratome wie folgt verdeutlicht, wobei "Subst." solche genannten Substituenten und "π" die Zuordnung zum π-System darstellt, falls das Donoratom dem π-System zugeordnet ist. Der Pfeil bedeutet die koordinative Bindung durch ein erstes freies Elektronenpaar, und sonstige Striche bedeuten weitere vorhandene Elektronenpaare:

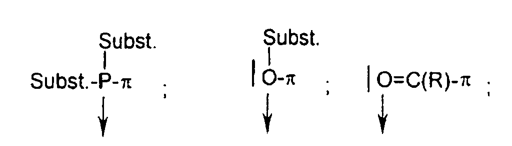

Akzeptoratome A sind einerseits Elemente aus der III. Hauptgruppe des Periodensystems der Elemente (Mendelejew) wie B, Al, Ga und In, bevorzugt B, Al oder Ga, die sich in einem Bindungszustand mit Substituenten befinden und eine Elektronenpaar-Lücke aufweisen. Andererseits umfaßt das Akzeptoratom A Elemente anderer Hauptgruppen des Periodensystems der Elemente, die in ihrem Bindungszustand eine als Akzeptor wirkende Gruppe bilden, ausgewählt aus den Gruppen Nitren, Carben, Carbin.

Das Donoratom D bildet in seinem Bindungszustand, gegebenenfalls mit Substituenten, die Donorgruppe; das Akzeptoratom A bildet in seinem Bindungszustand mit Substituenten die Akzeptorgruppe. Die Donorgruppe bedeutet somit die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenpaar-Lücke. D und A sind durch eine koordinativc Bindung verknüpft, wobei D eine positive (Teil)Ladung und A eine negative (Teil)Ladung annehmen.

Substituenten an den Donoratomen N, P, As, Sb, Bi, O, S, Se bzw. Te und an den Akzeptoratomen B, Al, Ga bzw. In sind beispielsweise:
C₁-C₂₀-(Cyclo)alkyl, C₁-C₂₀-Halogen-(cyclo)alkyl, C₁-C₂₀-(Cyclo)alkenyl, C₇-C₁₅-Aralkyl, C₆-C₁₂-Aryl, C₁-C₂₀-Alkoxy, C₆-C₁₂-Aryloxy, C₇-C₁₅-Aralkoxy, Indenyl, Halogen, 1-Thienyl, disubstituiertes Amino, Phenyl-acetylenyl, trisubstituiertes Silyl, wie Si(CH₃)₃ oder trisubstituiertes Silyl, das über -CH₂- an D bzw. A gebunden ist.

C₁-C₂₀-(Cyclo)alkyl ist nicht verzweigt oder verzweigt und ist beispielsweise Methyl, Ethyl, Propyl, i-Propyl, Cyclopropyl, Butyl, i-Butyl, tert.-Butyl, Cyclobutyl, Pentyl, Neopentyl, Cyclopentyl, die isomeren Hexyle, Cyclohexyl, die isomeren Heptyle, Cycloheptyl, die isomeren Octyle, Cyclooctyl, die isomeren Nonyle, Decyle, Undecyle, Dodecyle, Hexadecyle, Octadecyle und Eicosyle. Bevorzugtes Alkyl hat 1 bis 6 C-Atome; bevorzugtes Cycloalkyl hat 5 oder 6 C-Atome.

C₁-C₂₀-Halogen(cyclo)alkyl leitet sich von den genannten nichtsubstituierten (Cyclo)alkylen dadurch ab, daß die H-Atome teilweise oder vollständig durch Halogen, bevorzugt durch Fluor oder Chlor, substituiert sind.

C₁-C₂₀-Alkoxysubstituenten leiten sich von den genannten C₁-C₂₀-(Cyclo)alkylen dadurch ab, daß sie über einen Ethersauerstoff gebunden sind.

C₂-C₂₀-(Cyclo)alkenyl ist geradkettig oder verzweigt und ist beispielsweise Vinyl, Allyl, Butenyl, Pentenyl, Cyclopentenyl, Hexenyl, Cyclohexenyl und weitere, die sich durch eine endständig oder innenständig angeordnete Doppelbindung von den genannten (Cyclo)alkylen unterscheiden.

C₇-C₁₅-Aralkyl ist beispielsweise Tolyl, α- und β-Phenylethyl, Phenylpropyl, Phenylbutyl, 1- und 2-Naphthyl-methyl, 1- und 2-Naphthyl-ethyl, Anthryl-methyl, Biphenylyl-methyl und andere dem Fachmann bekannte.

C₆-C₁₂-Aryl ist beispielsweise Phenyl, 1-und 2-Naphthyl, Biphenylyl.

Aryloxy bzw. Aralkoxy leiten sich von den genannten Aryl- bzw. Aralkyl-Resten dadurch ab, daß sie über einen Ethersauerstoff gebunden sind.

Die in den genannten Substituenten enthaltenen aromatischen Reste können einfach, zweifach oder mehrfach durch C₁-C₄-Alkylgruppen, C₁-C₄-Alkoxygruppen, C₁-C₄-Halogenalkylgruppen, Halogen, Nitro, C₁-C₆-Alkyl-carboxy, C₁-C₆-Alkyl-carbonyloxy, C₁-C₆-Alkyl-carbonyl, Cyano, die Sulfonsäuregruppe oder die neutralisierte Sulfonsäuregruppe oder mehrere von ihnen substituiert sein.

Halogen ist beispielsweise Fluor, Chlor, Brom oder Iod, bevorzugt Fluor oder Chlor.

Disubstituiertes Amino kann C₁-C₁₂-Alkylsubstituenten, C₆-C₁₂-Arylsubstituenten, C₇-C₁₅-Aralkylsubstituenten oder zwei unterschiedliche der genannten Art tragen.

Trisubstituiertes Silyl kann C₁-C₂₀-Alkylsubstituenten, C₆-C₁₂-Arylsubstituenten, C₇-C₁₅-Aralkylsubstituenten oder ein Gemisch unterschiedlicher Substituenten aus den genannten tragen. Solche Silylgruppen können auch über eine Methylengruppe gebunden sein, beispielsweise (CH₃)₃SiCH₂-.

Bevorzugte Substituenten unter den genannten, sind C₁-C₆-Alkyl, C₅-C₆-Cycloalkyl, Phenyl, Tolyl, C₁-C₆-Alkoxy, C₆-C₁₂-Aryloxy, Vinyl, Allyl, Benzyl, Perfluorphenyl, Fluor, Chlor, Di-(C₁-C₆-alkyl)-amino, Diphenylamino.

Bevorzugte Donorgruppen sind beispielsweise (CH₃)₂N-, (C₂H₅)₂N-, (C₃H₇)₂N-, (C₄H₉)₂-N-, (C₆H₅)₂N-, (CH₃)₂P-, (C₂H₅)₂P-, (C₃H₇)₂P-, (i-C₃H₇)₂P-, (C₄H₉)₂P-, (t-C₄H₉)₂P-, (Cyclohexyl)₂P-, (C₆H₅)₂P-, (CH₃)(C₆H₅)P-, Cl₂P-, CH₃O-, CH₃S-, C₆H₅S-, C₆H₅-CO-, CH₃-CO-, (CH₃)₃Si-O-, t-Butyl-(CH₃)₂Si-O-, in denen N und P je ein freies Elektronenpaar und O und S je zwei freie Elektronenpaare tragen und wobei in einigen Beispielen der doppelt gebundene Sauerstoff über eine Spacer-Gruppe gebunden ist, sowie Systeme, wie der Pyrrolidonring, in welchem die von N verschiedenen Ringglieder ebenfalls als Spaccr wirken.

Bevorzugte Akzeptorgruppen sind beispielsweise (CH₃)₂B-, (C₂H₅)₂B-, H₂B-, (C₆H₅)₂B-, CH₃(C₆H₅)B-, (Vinyl)₂B-, (Benzyl)₂B-, Cl₂B-, (CH₃O)₂B-, Cl₂Al-, (CH₃)₂Al-, (i-C₄H₉)₂Al-, (Cl)(C₂H₅)Al-, (CH₃)₂Ga-, (C₃H₇)₂Ga-, ((CH₃)₃Si-CH₂)₂Ga-, (Vinyl)₂Ga-, (C₆H₅)₂Ga-, (CH₃)₂In-, ((CH₃)₃Si-CH₂)₂In-, (Cyclopentadienyl)₂In-. Weiterhin kommen von den genannten Species solche in Frage, in denen 1 oder mehrere H-Atome durch Fluor ersetzt wird.

Weiterhin kommen solche Donor- und Akzeptorgruppen in Frage, die chirale Zentren enthalten und in denen zwei Substituenten mit dem D- bzw. A-Atom einen Ring bilden. Beispiele hierfür sind etwa

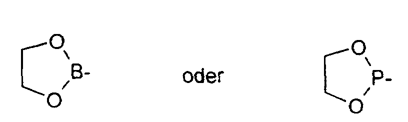

Bevorzugte Donor-Akzeptor-Bindungen sind beispielsweise folgende:
N→B, N→Al, P→B, P→Al, O→B, O→Al, C=O→B, C=O→Al, P→C, P→N.

Eines von D und A ist dem π-System zugeordnet, während das jeweils andere dem Metall M zugeordnet ist. So ist im Falle der Teilstruktur (la) das Donoratom D dem π-System zugeordnet, während im Falle der Teilstruktur (Ib) das Akzeptoratom A dem π-System zugeordnet ist.

Für den Fall der Zuordnung zum π-System kann D bzw. A Substituent des π-Systems oder Teil des π-Systems sein oder über einen Spacer mit dem π-System verbunden sein; im letzteren Fall handelt es sich gleichfalls um einen Substituenten des π-Systems, der lediglich um die Spacer-Gruppe verlängert ist.

Der Fall, daß D bzw. A über einen Spacer mit dem π-System verknüpft sind kann wie folgt dargestellt werden: D-Spacer-π bzw. A-Spacer-π. So stellt beispielsweise in den obigen Formelbeispielen der Formelteil =C(R)- einen solchen Spacer zwischen O und π dar. Solche Spacer-Gruppen sind beispielsweise: Dimethylsilyl, Diethylsilyl, Di-n-propylsilyl, Di-i-propylsilyl, Di-n-butylsilyl, Di-t-butylsilyl, Di-n-hexylsilyl, Methylphenylsilyl, Ethylmethylsilyl, Diphenylsilyl, Di-(p-t-butylphenethyl)silyl, n-Hexylmethylsilyl, Cyclopentamethylensilyl, Cyclotetramethylensilyl, Cyclotrimethylensilyl, Dimethylgermanyl, Diethylgermanyl, Phenylamino, t-Butylamino, Methylamino, t-Butylphosphino, Ethylphosphino, Phenylphosphino, Methylen, Dimethylmethylen (i-Propyliden), Diethylmethylen, Ethylen, Dimethylethylen, Diethylethylen, Dipropylethylen, Propylen, Dimethylpropylen, Diethylpropylen, 1,1-Dimethyl-3,3-dimethylpropylen, Tetramethyldisiloxan, 1,1,4,4-Tetramethyldisilylethylen, Diphenylmethylen. In bevorzugter Weise sind D bzw. A ohne Spacer an das π-System gebunden.

Für den Fall, daß D bzw. A Substituent des π-Systems sind, können sie unmittelbar am π-System, an einem ankondensierten 5- oder 6-Ring oder an einem anderen Substituenten des π-Systems sitzen. Für den Fall mehrerer D bzw. A können diese verschiedene der genannten Positionen einnehmen.

Für den Fall, daß D bzw. A Teil des π-Systems sind, gelangt man zu Heteroatom-π-Systemen. Die π-Systeme können demnach carbocyclische (wenn D bzw. A Substituenten des π-Systems sind) oder heterocyclische π-Systeme (wenn D bzw. A Teile des π-Systems sind) oder offenkettige Kohlenstoff-π-Systeme oder Heteroatom-π-Systeme sein. Diese π-Systeme können elektrisch geladen oder neutral sein. Sic können weiterhin ein- oder zweifach mit ungesättigten oder gesättigten 5- oder 6-Ringen kondensiert sein. Solche ankondensierten Ringe sind beispielsweise der Benzolring, das 1- oder 2-Naphthylsystem, ein Cyclopentyl- oder Cyclohexyl-Ring sein. Das π-System ist weiterhin dadurch gekennzeichnet, daß die H-Atome im Gesamtsystem teilweise oder vollständig durch gleiche oder verschiedene Reste aus der Gruppe von nicht verzweigtem oder verzweigtem C₁-C₂₀-(Cyclo)Alkyl, C₁-C₂₀-Halogen-(cyclo)alkyl, C₂-C₂₀-(Cyclo)Alkenyl, C₇-C₁₅-Aralkyl, C₆-C₁₂-Aryl oder ein- oder zweifach durch D oder A der oben beschriebenen Art ersetzt sein können.

Erfindungsgemäße π-Systeme sind substituiertes und nicht-substituiertes Ethylen, Allyl, Pentadienyl, Benzyl, Butadien, Benzol, das Cyclopentadienylanion, das Cyclooctatetraen-bisanion und die sich durch Ersatz mindestens eines C-Atoms durch ein Heteroatom ergebenden Spezies. Unter den genannten Spezies sind die cyclischen bevorzugt. Die Art der Koordination solcher π-Systeme (Liganden) zum Metall kann vom σ-Typ oder vom π-Typ sein.

Carboxylische π-Systeme sind beispielsweise Cyclopcntadien, substituiertes Cyclopentadien, Inden, substituiertes Inden, Fluoren und substituiertes Fluoren, die in der angegebenen Weise weiter substituiert sein können. Solche das Cyclopentadien enthaltenden Gerüste sind in Form ihrer Anionen ausgezeichnete Liganden für Übergangsmetall-Komplexe, wobei das Cyclopentadienyl-carbanion eine positive Ladung des Übergangsmetalls kompensiert. Einzelbeispiele für solche Carbanionen sind: Cyclopentadienyl, Methyl-cyclopentadienyl, 1,2-Dimethyl-cyclopentadienyl, 1,3-Dimethyl-cyclopentadienyl, 1,2-Diethyl-cyclopentadienyl, Tetramethyl-cyclopentadienyl, Ethyl-cyclopentadienyl, n-Butyl-cyclopentadienyl, n-Octyl-cyclopentadienyl, β-Phenylpropyl-cyclopentadienyl, Propylcyclopentadienyl, t-Butyl-cyclopentadienyl, Benzyl-cyclopentadienyl, Diphenylmethyl-cyclopentadienyl, Trimethylgermyl-cyclopentadienyl, Trimethylstannyl-cyclopentadienyl, Trifluormethyl-cyclopentadienyl, Trimethylsilyl-cyclopentadienyl, Pentamethyl-cyclopentadienyl, N,N-Dimethylamino-cyclopcntadienyl, Dimethylphosphino-cyclopentadienyl, Methoxy-cyclopentadienyl, Dimethylboranyl-cyclopentadienyl, (N,N-Dimethylaminomethyl)-cyclopentadienyl, Indenyl, Phenylindenyl, Tetrahydroindenyl, Fluorenyl, Tetrahydro- bzw. Octahydro-fluorenyl, am 6-Ring benzoanellierte Fluorenyle und Indenyle.

Heterocyclische π-Systeme, worin D oder A Teil des Ringsystems ist, sind beispielsweise:

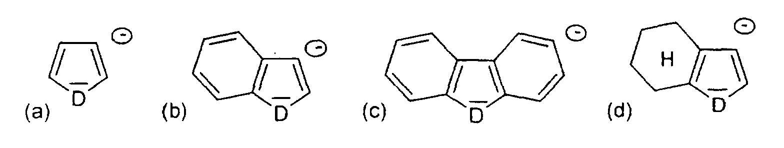

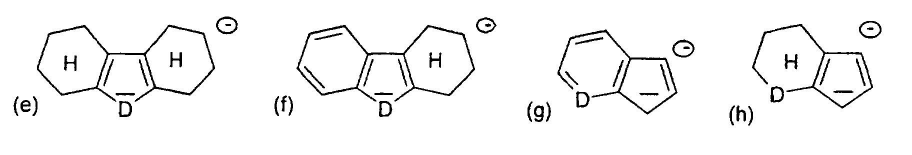

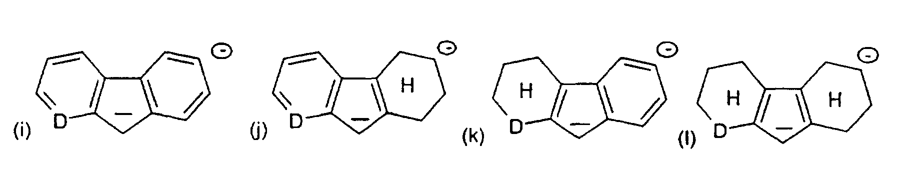

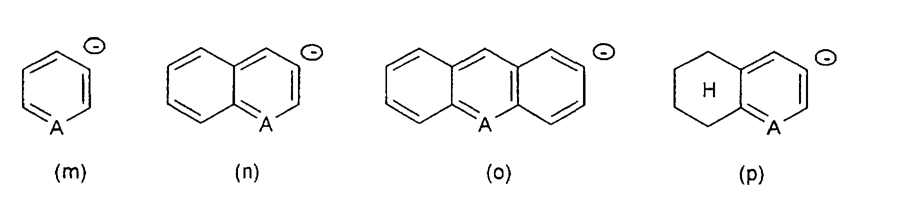

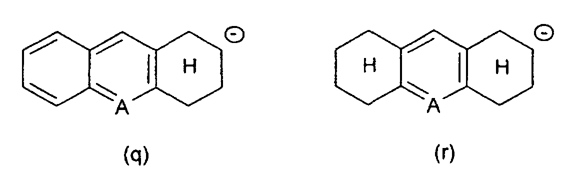

Wichtige heterocyclische Ringsysteme sind die mit (a), (b), (c), (d), (g), (m), (n) und (o) bezeichneten Systeme; besonders wichtige sind die mit (a), (b), (c) und (m) bczeichneten.

Für den Fall, daß eines von D und A Substituent seines zugehörigen Ringsystems ist, ist das Ringsystem 3-, 4-, 5-, 6-, 7- oder 8-gliedrig mit oder ohne elektrische Ladung, das in der angegebenen Weise weiter substituiert und/oder kondensiert sein kann. Bevorzugt sind 5- und 6-gliedrige Ringsysteme. Besonders bevorzugt ist das negativ geladene Cyclopentadienyl-System.

Beispiele für Heterocyclen, die solchen π-Komplexen zugrundeliegen und die ein Donoratom aus der 5. oder 6. Hauptgruppe des Periodensystems der Elemente (Mendelejew) enthalten, sind: Pyrrol, Methylpyrrol, Dimethylpyrrol, Trimethylpyrrol, Tetramethylpyrrol, t-Butylpyrrol, Di-t-butylpyrrol, Indol, Methylindol, Dimethylindol, t-Butylindol, Di-t-butylindol, Tetramethylphosphol, Tetraphenylphosphol, Triphenylphosphol, Trimethylphosphol, Phosphainden, Dibenzophosphol (Phosphafluoren), Dibenzopyrrol, Furan, Thiophen, Cumaron, Thionaphthen, Carbazol, Diphenylenoxid, Diphenylensulfid, Pyridin.

Beispiele für heterocyclische π-Systeme, die ein Akzeptoratom A als Teil des Systems enthalten, ist beispielsweise Borabenzol.

Offenkettige Heteroatom-π-Komplexe sind beispielsweise: 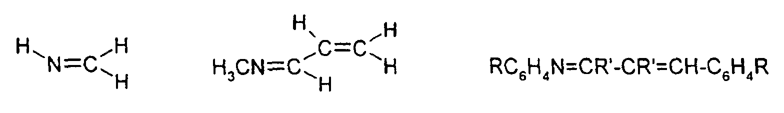 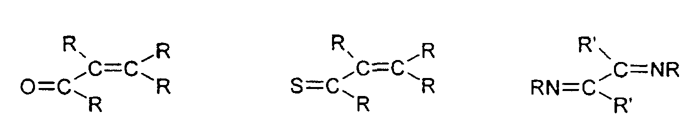
- R, R' =: H, Alkyl, Aryl, Alkaryl z.B. Methyl, Ethyl, t-Butyl, Phenyl, o,o'-Di-(i-Propyl)-phenyl.

Das π-System kann neben den obengenannten Substituenten zusätzlich ein- oder zweifach durch D oder A substituiert sein.

M steht für ein Übergangsmetall aus der III. bis VIII. Nebengruppe des Periodensystems der Elemente (Mendelejew) einschließlich der Lanthaniden und der Aktiniden, bevorzugt III. bis VI. Nebengruppe, einschließlich der Lanthaniden, und Ni; beispielhaft seien genannt: Sc, Y, La, Sm, Nd, Lu, Ti, Zr, Hf, Th, V, Nb, Ta, Cr. Bevorzugt hiervon sind Ti, Zr, Hf, V, Nb, Cr und Ta, besonders bevorzugt Ti, Zr und Hf. Die genannten Übergangsmetalle können in verschiedenen ihrer bekannten Wertigkeitsstufen in den erfindungsgemäßen π-Komplexen auftreten.

Bei der Ausbildung der π-Komplex-Struktur wird für den Fall, daß der π-Komplex eine anionische Ladung trägt, eine positive Ladung des Übergangsmetalls M durch den π-Komplex kompensiert. Im Falle elektrisch neutraler π-Systeme wird keine positive Ladung des Übergangsmetalls M kompensiert. In jedem Falle noch verbleibende positive Ladungen am Übergangsmetall M werden durch zumeist einwertige Anionen X abgesättigt. Beispiele für X sind: Hydrid, Chlorid, Methyl, Ethyl, Phenyl, Fluorid, Bromid, lodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Buloxy, Phenoxy, Dimethylamino, Diethylamino, Di-t-butylamino, Diphenylamino, Diphenylphosphino, Dicyclohexylphosphino, Dimethylphosphino, Methyliden, Ethyliden, Propyliden. Zwei gleiche oder verschiedene einwertige Anionen können auch miteinander verknüpft sein (Dianionen 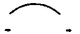 ), beispielsweise einwertig oder zwei-wertig negative Reste aus gleichen oder verschiedenen, linearen oder verzweigten, gesättigten oder ungesättigten Kohlenwasserstoffen, Aminen. Phosphinen, Thioalkoholen, Alkoholen oder Phenolen. Zwei einfache Ionen wie CR₃^{θ}, NR₂^{θ}, PR₂^{θ}, OR^{θ}, SR^{θ} usw. können durch gesättigte oder ungesättigte Kohlenwasserstoff- oder Silanbrücken verbunden sein, wobei solche Dianionen entstehen und die Anzahl der Brückenatome 0, 1, 2, 3, 4, 5 oder 6 betragen kann; bevorzugt sind 0 bis 4 Brückenatome, besonders bevorzugt 1 oder 2 Brückenatome. Diese Brückenatome können außer H-Atomen noch weitere Kohlenwasserstoff-Substituenten ertragen. Beispiele für Brücken zwischen den einfachen Anionen sind etwa -CH₂-, -CH₂-CH₂-, -(CH₂)₃-, -CH=CH-, -(CH=CH)₂-, -CH=CH-CH₂-, -CH₂-CH=CH-CH₂-, -Si(CH₃)₂-, -C(CH₃)₂-. Beispiele für Dianionen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-buladiendiyl, 1,4-Bis-(trimethylsilyl)-1,3-butadiendiyl, 1,3-Butadiendiyl, das Ethylenglykol-Dianion. Besonders bevorzugt sind 1,4-Diphenyl-1,3-butadiendiyl, 1,3-Pentadiendiyl, 1,4-Dibenzyl-1,3-butadiendiyl, 2,4-Hexadiendiyl, 3-Methyl-1,3-pentadiendiyl, 1,4-Ditolyl-1,3-butadiendiyl und 1,4-Bis-(trimethylsilyl)-1,3-butadiendiyl. Weitere Beispiele für Dianionen sind solche mit Heteroatomen, etwa der Struktur 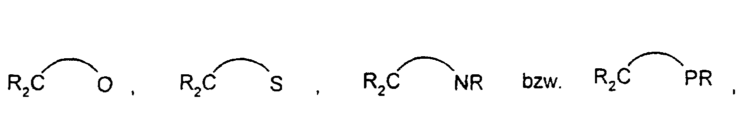 wobei die durch den Bogen bezeichnete Brücke die angegebene Bedeutung hat. Besonders bevorzugt sind darüber hinaus zur Ladungskompensation schwach oder nicht koordinierende Anionen der weiter unten genannten Art.

Der Index n nimmt in Abhängigkeit von der Ladung von M, der des π-Komplexes und der Art der direkten Bindung zwischen A und M im Falle der Teilstruktur (la) bzw. der Bindung zwischen D und M im Falle der Teilstruktur (Ib) in Wert Null, Eins, Zwei, Drei oder Vier, bevorzugt Null, Eins oder Zwei an. Die obengenannten Übergangsmetalle können nämlich, u.a. abhängig von ihrer Zugehörigkeit zu verschiedenen Nebengruppen, Wertigkeiten/Ladungen von Zwei bis Sechs, bevorzugt Zwei bis Vier annehmen, von denen im Falle geladener π-Komplexe und der Direktbindung A-M bzw. D-M jeweils zwei kompensiert werden können. Im Falle von La³⁺ nimmt demnach der Index n beispielsweise den Wert Eins und im Falle von Zr⁴⁺ beispielsweise den Wert Zwei an; bei Sm²⁺ wird beispielsweise n = Null.

Zur Herstellung der π-Komplex-Verbindungen von Übergangsmetallen der Formel (la) bzw. (Ib) kann man im Falle der Teilstruktur der Formel (la) entweder je eine Verbindung der Formeln (II) und (III) oder je eine Verbindung der obigen Formeln (V) und (VI) oder je eine Verbindung der obigen Formeln (VII) und (VIII) jeweils unter Austritt der Verbindung YX (IV) umsetzen und im Falle der Teilstruktur der Formel (Ib) entweder je eine Verbindung der Formeln (IX) und (X) oder je eine Verbindung der Formeln (XI) und (VI) oder je eine Verbindung der Formeln (XII) und (XIII) jeweils unter Austritt der Verbindung YX (IV) umsetzen. Diese Umsetzung wird in Gegenwart oder in Abwesenheit eines aprotischen Lösungsmittels im Temperaturbereich von -78°C bis +120°C, bevorzugt im Bereich von -40°C bis +70°C und in einem Molverhältnis von (II): (III) bzw. (V): (VI) bzw. (VII): (VIII) bzw. (IX): (X) bzw. (XI): (VI) bzw. (XII) : (XIII) von 1:0,5 bis 2, vorzugsweise 1:0,8 bis 1,25, besonders bevorzugt 1:1 vorgenommen. In Fällen, bei denen beide Umsetzungspartner Flüssigkeiten sind oder in denen wenigstens einer unter den Reaktionsbedingungen flüssig ist und den anderen aufzulösen oder aufzuschlämmen vermag und/oder das Umsetzungsprodukt ebenfalls flüssig ist, kann auf die Mitverwendung eines Lösungsmittels verzichtet werden. Zur Aufrechterhaltung der flüssigen Phase in der erfindungsgemäßen Umsetzung ohne Lösungsmittel kann auch die austretende Verbindung YX (IV) dienen, sofern sie eine Flüssigkeit darstellt.

Y steht für den Rest eines Silans, eines Germans oder eines Stanans der weiter obengenannten Bedeutung. Y kann weiterhin für den Fall, daß der π-Komplex eine negative Ladung trägt, auch ein Kationäquivalent eines (Erd)Alkalimetalls oder des Talliums sein. Schließlich kann Y auch Wasserstoff sein, wenn X ein Amidanion vom Typ R₂N⁻, ein Carbanion vom Typ R₃C⁻ oder ein Alkoholatanion vom Typ RO⁻ ist.

Die austretende Verbindung YX kann somit beispielsweise Trimethylchlorsilan, Triethylchlorsilan, Tri-(n-butyl)-chlorsilan, Triphenylchlorsilan, Trimethylchlorgerman. Trimethylchlorstannan, TlCl, LiCl, LiBr, LiF, LiI, NaCl, NaBr, KCl, KF, MgCl₂, MgBr₂, CaCl₂, CaF₂, ein Amin R₂NH bzw. R₂NY bzw. eine Kohlenwasserstoffverbindung der Formel R₃CH bzw. R₃CY oder ein Ether ROY sein, worin Y für Si(R¹R²R³), Ge(R¹R²R³) oder Sn(R¹R²R³) steht. Weitere Beispiele für die Verbindung YX sind demnach Dimethylamin, Diethylamin, Di-(n-propyl)-amin, Di-(i-propyl)-amin. Di-(t-butyl)-amin, t-Butylamin, Cyclohexylamin, Anilin, Methylphenyl-amin, Diallylamin, Methan, Toluol, Trimethylsilylamin, Trimethylsilylether, Tetramethylsilan und analoge dem Fachmann geläufige Verbindungen.

In der erfindungsgemäßen Umsetzung wird jeweils eine Komponente mit einer leicht abspaltbaren Abgangsgruppe Y und eine Verbindung mit einem Übergangsmetall und mindestens einem ersetzbaren Anion X umgesetzt. Die leicht abspaltbare Abgangsgruppe kann hierbei an einem π-System mit zugeordnetem Donoratom (II) bzw. mit zugeordnetem Akzeptoratom A (IX) sitzen oder an einem π Komplex mit bereits vorgebildeter D/A-Bindung (V) bzw. (XI). Die leicht abspaltbare Abgangsgruppe kann jedoch auch in Form einer Verbindung mit dem (substituierten) Donoratom D (XIII) bzw. als Verbindung mit dem (substituierten) Akzeptoratom A (VIII) in das Verfahren eingebracht werden. In symmetrischer Form hierzu wird das Übergangsmetall in die Umsetzung eingebracht.

Beide Ausgangsstoffe des Herstellungsverfahrens, nämlich (II), (V), (VII), (IX), (XI) bzw. (XII) auf der einen Seite und (III), (VI), (VIII), (X) bzw. (XIII) reagieren beim Zusammengeben spontan unter gleichzeitiger Ausbildung der Donor-Akzeptor-Bindung, sofern diese nicht schon vorgebildet ist, bzw. gleichzeitiger Komplexierung des Übergangsmetalls unter Austritt der Verbindung YX. Bei der formelmäßigen Darstellung der Donor-Akzeptor-Bindung wurden die Substituenten an D und A der Übersichtlichkeit halber weggelassen.

Für den Fall der Mitverwendung von Lösungsmitteln im erfindungsgemäßen Herstellungsverfahren sind dies aprotische, polare oder unpolare Lösungsmittel, wie aliphatische und aromatische Kohlenwasserstoffe oder aliphatische und aromatische Halogenkohlenwasserstoffe. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Pentan, Heptan, Petrolether, Toluol, Benzol, Chlorbenzol, Methylenchlorid, Diethylether, Tetrahydrofuran, Ethylenglykoldimethylether.

Die Ausgangsstoffe für das erfindungsgemäße Verfahren können gemäß literaturbekannten Verfahren oder analog zu diesen hergestellt werden. So läßt sich beispielsweise analog zu J. of Organometallic Chem. 29 (1971), 227 das marktgängige Trimethylsilyl-cyclopentadien zunächst mit Butyl-lithium und dann mit Trimethylsilylchlorid zum Bis(trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. 169 (1979), 327), welches schließlich analog zu J. of Organometallic Chem. 169 (1979), 373 mit Titantetrachlorid zum Dichlorboryl-cyclopentadienyl-titantrichlorid umgesetzt werden kann. Diese zuletzt genannte Verbindung fällt unter die obige Formel (XII). Durch Umsetzung mit Trimethylaluminium können die beiden mit dem Boratom verbundenen Chloratome durch Methylgruppen ausgetauscht werden. Analog den Verfahrensbeschreibungen in J. Am. Chem. Soc. 105, (1983), 3882 und Organometallics 1, (1982), 1591 kann das marktgängige Cyclopentadienyl-thallium mit Chlor-diphenylphosphin und weiter mit Butyl-lithium umgesetzt werden, wobei man zu Vorstufen der Formel (VII) gelangt. Als weiteres Beispiel sei die Bildung von Dimethylstannyl-diphenylphosphin-inden durch Umsetzung von Inden zunächst mit Butyl-lithium, wie oben bereits erwähnt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter der Formel (VII) gibt. Solche Synthesen und Herstellungsweisen sind dem auf dem Gebiet der metallorganischen und der elementorganischen Chemie tätigen Fachmann geläufig und in zahlreichen Literaturstellen veröffentlicht, von denen oben nur einige exemplarisch angeführt wurden. Die am Ende der allgemeinen Beschreibung aufgeführten Beispiele zeigen, wie heterocyclische Vorstufen für die erfindungsgemäßen π-Komplex-Verbindungen von Übergangsmetallen zugänglich sind. So kann Pyrollyl-lithium aus Pyrrol durch Umsetzung mit Butyl-lithium hergestellt werden, wie etwa in J. Am. Chem. Soc. 104, (1982), 2031 beschrieben ist. Trimethylstannyl-phosphol wird erhalten durch Umsetzung von 1-Phenylphosphol mit Lithium, gefolgt von Aluminiumtrichlorid, wobei Phospholyl-lithium entsteht, welches seinerseits mit Trimethylchlorstannan zum Trimethylstannyl-phosphol weiter reagiert (vgl. J. Chem. Soc., Chem. Comm. 1988, 770). Diese Verbindung kann mit Titantetrachlorid zu Phospholyl-titantrichlorid umgesetzt werden. In analoger Weise existieren bekannte Herstellungsverfahren für offenkettige π-Komplex-Verbindungen aus Kohlenstoffatomen allein oder unter Einbau von Heteroatomen, die analog zu den genannten Methoden mit Donorgruppen bzw. Akzeptorgruppen ausgerüstet werden können.

Die weiter oben im Zusammenhang mit ii) im Rahmen der Formel (Ia) genannten Oniumsalz-, Ylid-/Imin- und Ylidanion-/Iminanion-Strukturen können gemäß fachmännisch bekannten Verfahren synthetisiert werden (siehe weiter oben zitierte Literatur).

Die erfindungsgemäßen π-Komplex-Verbindungen von Übergangsmetallen der Formeln (Ia) und (Ib) können in Polymerisationsverfahren als Katalysatoren verwendet werden. Solche Homo- oder Copolymerisationsverfahren werden in der Gas-, Lösungs-, Hochtemperaturlösungs-, Masse-, Hochdruck- oder Slurry-Phase bei -60 bis +250°C, bevorzugt 0 bis 200°C und 5·10⁴ bis 5000·10⁵, bevorzugt 1·10⁵ bis 3000·10⁵ Pa (0,5 bis 5.000, bevorzugt 1 bis 3.000 bar) und in Gegenwart oder Abwesenheit von gesättigten oder aromatischen Kohlenwasserstoffen oder von gesättigten oder aromatischen Halogenkohlenwasserstoffen sowie in Gegenwart oder Abwesenheit von Wasserstoff durchgeführt, wobei die π-Komplex-Verbindungen in einer Menge von 10⁻¹² bis 10⁻¹ mol pro mol Monomere eingesetzt werden. Solche Polymerisationsverfahren können diskontinuierlich oder bevorzugt kontinuierlich durchgeführt werden. Ebenso kann im Semibatch-Verfahren gearbeitet werden. Solche Verfahren können auch in mehr als einem Reaktor oder mehr als einer Reaktionszone durchgeführt werden. Für den Fall mehrerer Reaktionszonen kann darin unter verschiedenen Polymerisationsbedingungen gearbeitet werden. So kann in einem Reaktor ein Präpolymer gebildet werden, das in weiteren Reaktoren als heterogener Katalysator für die eigentliche (Co)Polymerisation besondere Eignung besitzt. Für die Bildung solcher Präpolymerer eignen sich besonders unlösliche, heterogen vorliegende D/A-Katalysatoren in Form der erfindungsgemäßen π-Komplex-Verbindungen auf anorganischen Trägern.

Die erfindungsgemäßen π-Komplex-Verbindungen können isoliert als Reinstoffe zur (Co)Polymerisation eingesetzt werden. Es ist aber auch möglich, sie "in situ" im (Co)Polymerisationsreaktor in einer dem Fachmann bekannten Weise zu erzeugen und zu verwenden. Die erfindungsgemäßen π-Komplex-Verbindungen können sowohl in einkerniger als auch in mehrkerniger Form vorliegen.

Erfindungsgemäß können die π-Komplex-Verbindungen weiterhin in Gegenwart von Lewis-Säuren, Brönstedt-Säuren oder Pearson-Säuren oder zusätzlich in Gegenwart von Lewis-Basen eingesetzt werden. Solche Lewis-Säuren sind beispielsweise Borane oder Alane, wie Aluminiumalkyle, Aluminiumhalogenide, Aluminiumalkoholate, Bororganyle, Borhalogenide, Borsäureester oder Bor- oder Aluminium-Verbindungen, die sowohl Halogenid- als auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein π-Komplex-Kation ausbilden, das durch ein sperriges, schlecht koordinierendes Anion ladungskompensiert wird. Solche Verbindungen wirken cokatalytisch. Weitere Cokatalysatoren sind neben den genannten auch Lithiumalkyle oder Mg-organische Verbindungen, wie Grignard-Verbindungen oder teilhydrolysierte Bororganyle. Bevorzugte Cokatalysatoren sind Aluminoxane. Aluminoxanverbindungen sind beispielsweise solche der Formel 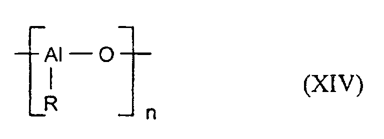 verstanden, in der
- R: für C₁-C₂₀-Alkyl, C₆-C₁₂-Aryl oder Benzyl steht und
- n: eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkylen) in Kombination mit Wasser (in gasförmiger, flüssiger, fester oder gebundener Form, etwa als Kristallwasser) einzusetzen. Das Wasser kann auch als (Rest)Feuchte des Polymerisationsmediums, des Monomers oder eines Trägers wie Silikagel zugeführt werden. Die der Formel (XIV) analogen Bor-Verbindungen sind ebenfalls geeignet. Die aus der eckigen Klammer von Formel (XIV) herausragenden Bindungen enthalten als Endgruppen des oligomeren Aluminoxans R-Gruppen oder AlR₂-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgängige Verbindungen. Im speziellen Fall von R = CH₃ wird von Methylaluminoxanen (MAO) gesprochen.

Die Aktivierung mit dem Cokatalysator bzw. die Erzeugung des voluminösen nicht- oder schwach-koordinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel durchgeführt werden.

Die π-Komplex-Verbindungen bzw. die Metallocen-Verbindungen und die Aluminoxane können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, Al₂O₃, MgCl₂, NaCl, B₂O₃, Polysiloxane, Cellulosederivate, Cyclodextrine, Stärkederivate und andere Polymere, wie Polyethylen oder Polypropylen. Hierbei kann sowohl erst die π-Komplex-Verbindung bzw. die Metallocen-Verbindung als auch erst das Aluminoxan auf den Träger gebracht werden und die jeweils andere Komponente danach zugesetzt werden. Gleichermaßen kann man aber auch die π-Komplex-Verbindung bzw. die Metallocen-Verbindung in homogener oder heterogener Form mit dem Aluminoxan aktivieren und danach die aktivierte Metallocen-Verbindung auf den gegebenenfalls Aluminoxan-beladenen Träger bringen.

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt. Die Oberfläche solcher anorganischer Träger, insbesondere von Silica (SiO₂), liegt zwischen 10 und 1000 m²/g, vorzugsweise zwischen 100 und 800 m²/g. Der Teilchendurchmesser liegt zwischen 0,1 und 500 Mikrometer (µ), vorzugsweise zwischen 10 und 200 µ.

Das Mengenverhältnis zwischen π-Komplex-Verbindungen und Cokatalysator beträgt 1 bis 100.000 mol Cokatalysator pro mol π-Komplex-Verbindung.

Erfindungsgemäß können weiterhin die Reaktionsprodukte der oben beschriebenen ionisierenden Agenzien mit π-Komplex-Verbindungen der Formel (Ia) bis (Id) eingesetzt werden. Sie lassen sich durch die Formeln (XVa) bis (XVd) beschreiben 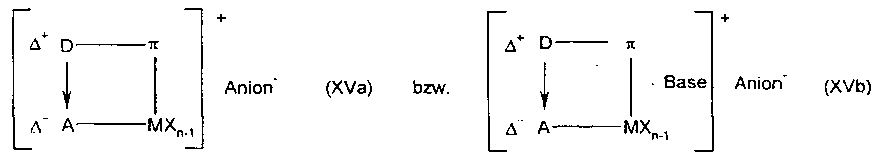 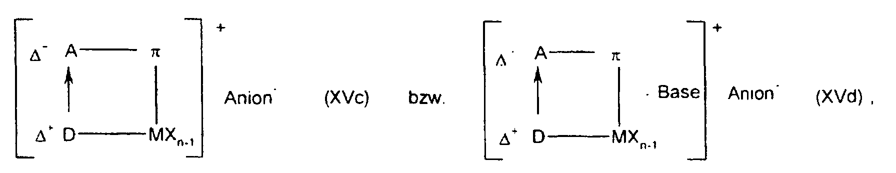 in denen
Anion für das gesamte sperrige, schlecht koordinierende Anion und
Base für eine Lewis-Base stehen.

Beispiele für schlecht koordinierende Anionen sind Borate und Alanate, wie beispielsweise 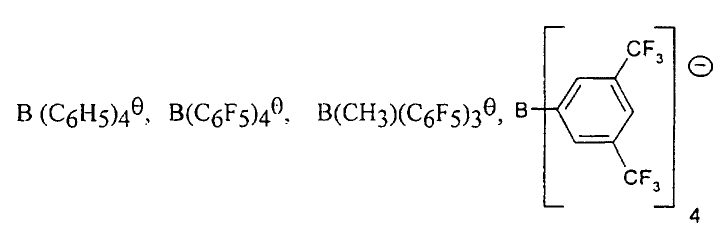 oder Sulfonate, wie Tosylat oder Triflat, Tetrafluorborate, Hexafluorphosphate oder -antimonate, Perchlorate, sowie voluminöse Cluster-Molekülanionen vom Typ der Carborane, beispielsweise C₂B₉H₁₂^{θ} oder CB₁₁H₁₂^{θ}. Beim Vorliegen solcher Anionen können Metallocen-Verbindungen auch bei Abwesenheit von Aluminoxan als hochwirksame Polymerisationskatalystoren wirken. Das ist vor allem dann der Fall, wenn ein X-Ligand eine Alkylgruppe, Allyl oder Benzyl darstellt. Es kann aber auch vorteilhaft sein, solche Metallocen-Komplexe mit voluminösen Anionen in Kombination mit Aluminiumalkylen, wie (CH₃)₃Al, (C₂H₅)₃Al, (n-/i-Propyl)₃Al, (n-/t-Butyl)₃Al, (i-Butyl)₃Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab. Metallalkyle der beschriebenen Art können auch vorteilhaft in Kombination mit Aluminoxan-Co-katalysatoren eingesetzt werden, etwa um die benötigte Menge an Aluminoxan zu erniedrigen. Beispiele für Borverbindungen, bei deren Verwendung solche Anionen eingeführt werden, sind:
Triethylammonium tetraphenylborat,
Tripropylammonium tetraphenylborat,
Tri(n-butyl)ammonium tetraphenylborat,
Tri(t-butyl)ammonium tetraphenylborat,
N,N-Dimethylanilinium tetraphenylborat,
N,N-Diethylanilinium tetraphenylborat,
N,N-Dimethyl(2,4,6-trimethylanilinium)tetraphenylborat,
Trimethylammonium-tetrakis(pentafluorophenyl)borat, Triethylammonium-tetrakis(pentafluorophenyl)borat,
Tripropylammonium-tetrakis(pentafluorophenyl)borat,
Tri(n-butyl)ammonium-tetrakis(pentafluorophenyl)borat, Tri(sec-butyl)ammonium-tetrakis(pentafluorophenyl)borat,
N,N-Dimethylanilinium-tetrakis(pentafluorophenyl)borat,
N,N-Diethylanilinium-tetrakis(pentaflurophenyl)borat, N,N-dimethyl(2,4,5-trimethylanilinium)-tetrakis(pentafluorophenyl)borat,
Trimethylammonium-tetrakis(2,3,4,6-tetrafluorophenyl)borat,
Triethylammonium-tetrakis (2,3,4,6-tetrafluorophenyl)borat,
Tripropylmmonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,N-Diethylanilinium-tetrakis(2,3,4,6-tetrafluorophenyl)borat,
N,N-Dimethyl-(2,4,6-trimethylanilinium)-tetrakis-(2,3,4,6-tetrafluorophenyl)borat;
Dialkylammonium-Salze, wie:
Di-(i-propyl)ammonium-tetrakis(pentafluorophenyl)borat und
Dicyclohexylammonium-tetrakis(pentafluorophenyl)borat;
Tri-substituierte Phosphonium-Salze, wie:
Triphenylphosphonium-tetrakis(pentafluorophenyl)borat,
Tri(o-tolyl)phosphonium-tetrakis(pentafluorophenyl)borat,
Tri(2,6-dimethylphenyl)phosphonium-tetrakis(pentafluorophenyl)borat,
Tritolylmethyl-tetrakis(pentafluorphenyl)borat,
Triphenylmethyl-tetraphenylborat (Trityl-tetraphenylborat),
Trityl-tetrakis(pentafluorphenyl)borat,
Silber-tetrafluorborat,
Tris(pentafluorphenyl)boran,
Tris(trifluormethyl)boran sowie die entsprechenden Al-organischen Verbindungen.

Auch anders fluorierte, ansonsten analoge Bor- und Aluminium-Verbindungen mit 1 bis 3 Fluor-Substituenten kommen in Frage.

Weitere schlecht koordinierende Anionen können aus Diboranyl- oder Dialanyl-Verbindungen des Typs 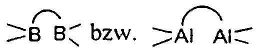 gebildet werden.

Die Aktivierung durch solche voluminösen Anionen gelingt beispielsweise durch Umsetzung der π-Komplex-Verbindungen mit D/A-Bindung mit Tris-(pentafluorphenyl)-boran, Triphenylboran, Triphenylaluminium, Trityl-tetrakis-(pentafluorphenyl)-borat oder N,N-Dialkyl-phenyl-ammonium-tetrakis-(pentafluorphenyl)-borat sowie die entsprechenden Alane und Alanate oder den entsprechenden Phosphonium- oder Sulfoniumsalzen von Boraten oder (Erd)Alkalimetall-, Thallium- oder Silbersalzen von Boraten bzw. Alanaten, Carboranen, Tosylaten, Triflaten, Perfluorcarboxylaten, wie Trifluoracetat, oder den korrespondierenden Säuren. Vorzugsweise werden dabei π-Komplex-Verbindungen von Übergangsmetallen eingesetzt, deren Anionäquivalente X Alkyl-, Allyl-, Aryl- oder Benzylgruppen darstellen. Solche Derivate können auch "in situ" hergestellt werden, indem man π-Komplex-Verbindungen mit anderen Anionäquivalenten, wie X = F, Cl, Br, OR usw. zuvor mit Aluminiumalkylen, Lithium-organylen oder Grignard-Verbindungen oder Zink- oder Bleialkylen umsetzt. Die daraus erhältlichen Umsetzungsprodukte können ohne vorherige Isolierung mit den obengenannten Boranen, Boraten, Alanen oder Alanaten aktiviert werden.

Es liegt weiterhin im Rahmen der vorliegenden Erfindung, gleichzeitig mehrere π-Komplex-Verbindungen mit D/A-Bindung einzusetzen, um ein bestimmtes Material-Eigenschaftsprofil einzustellen. Dementsprechend ist es auch möglich, eine oder mehrere π-Komplex-Verbindungen mit D/A-Bindung in Kombination mit anderen π-Komplex-Verbindungen, die keine D/A-Bindung aufweisen, einzusetzen.

Die erfindungsgemäße Verwendung der π-Komplex-Verbindungen von Übergangsmetallen mit einer D/A-Bindung betrifft die Homo- oder Copolymerisation von Monomeren aus der Gruppe der C₂-C₁₂-α-Olefine, der C₄-C₃₀-Cycloolefine, der C₄-C₈-Diolefine, der C₂-C₈-Alkine, der C₄-C₈-Vinylester und der C₈-C₁₂-Vinylaromaten.

Olefine der genannten Art sind beispielsweise Ethylen, Propylen, Buten-1, Penten-1, Hexen-1, Octen-1, 3-Methyl-buten-1, 4-Methyl-penten-1, 4-Methyl-hexen-1, α-i-Octen. Solche Olefine können weiterhin substituiert sein, beispielsweise mit Phenyl, substituiertem Phenyl, Halogen, der veresterten Carboxylgruppe, der Säureanhydridgruppe; hierdurch gelangt man in die Gruppe der genannten Vinylaromaten und Vinylester und anderer olefinisch ungesättigter Verbindungen, beispielsweise Styrol, Methylstyrol, Chlorstyrol, Fluorstyrol, 4-Vinyl-biphenyl, Vinyl-fluoren, Vinyl-anthracen, Methylmethacrylat, Ethylacrylat, Vinylsilan, Trimethyl-allylsilan, Vinylchlorid, Vinylidenchlorid, Tetrafluorethylen, Vinylcarbazol, Vinylpyrroliden, Vinylether und Vinylester, wie Vinylacetat oder Vinylpropionat. Bevorzugte Monomere sind Ethylen, Propylen, Buten, Hexen, Octen und Methylmethacrylat.

Cyclische Monomere sind mono- oder polycyclisch und fallen unter eine der beiden Formeln 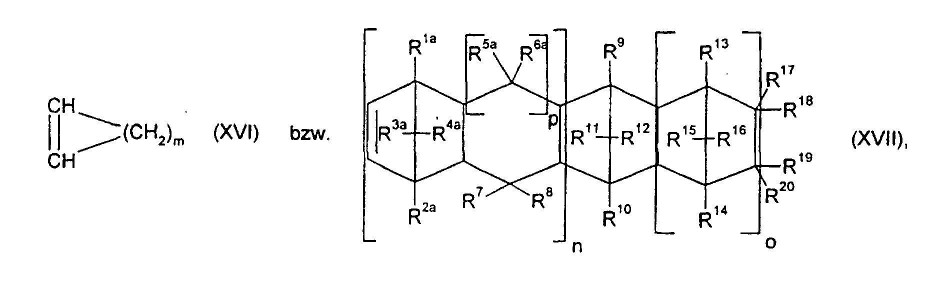 in denen die Indices
- m: eine Zahl von 2 bis 10, bevorzugt 3 bis 6,
- n: die Zahl 0 oder 1,
- o: die Zahl 0, 1, 2 oder 3 und
- p: die Zahl 0 oder 1 bedeutet,
in Formel (XVI) zwei benachbarte CH₂-Gruppen durch die Gruppe -CH=CH- ersetzt sein kann und in Formel (XVII) die Reste R^{1a} bis R^{6a} und R⁷ bis R²⁰ unabhängig voneinander Wasserstoff, Fluor, Chlor, Brom, geradkettiges oder verzweigtes C₁-C₂₀-Alkyl, C₃-C₈-Cycloalkyl oder C₆-C₁₆-Aryl darstellen, wobei zusätzlich das Restepaar R¹⁸/R¹⁹ eine Doppelbindung oder eine der Gruppen -CHR²¹-CHR²²-CHR²³-, -CHR²¹-CHR²²-CHR²³-CHR²⁴- oder -CHR²¹-CHR²²-CHR²³-CHR²⁴-CHR²⁵-, in denen R²¹ bis R²⁵ Wasserstoff oder C₁-C₄-Alkyl ist, bedeuten kann und das Restepaar R¹⁷/R¹⁸ die doppelt gebundene Gruppe =C(R²⁶,R²⁷), in der R²⁶ und R²⁷ C₁-C₄-Alkyl sind und R²⁷ auch Wasserstoff sein kann, bedeuten kann.

Solche cyclische Monomere haben eine oder mehrere, bevorzugt eine oder zwei Doppelbindungen und sind bekannt und beispielsweise in den Verfahren von EP-A 610 852, EP-A 690 078 und US 5 567 777 eingesetzt.

Bevorzugte cyclische Monomere der Formel (XVII) sind solche der Formeln

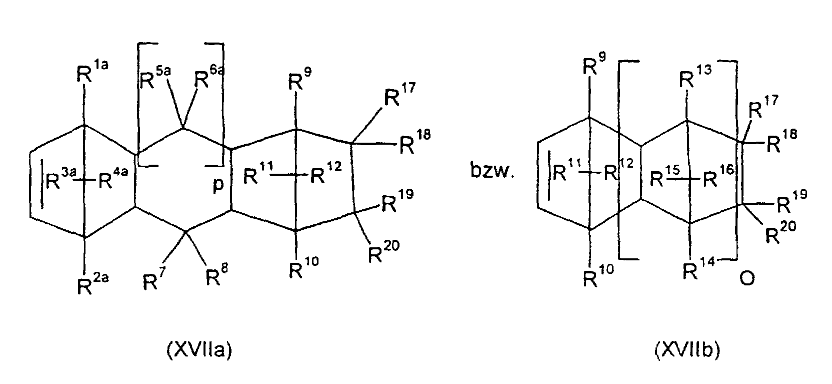

Eine beispielhafte, nicht erschöpfende Aufzählung solcher cyclischer Comonomerer umfaßt Cyclobuten, Cyclopenten, Cyclopentadien, Cyclohexen, Cyclohepten, Cycloocten, Cyclodecen, Cyclododecen, Bicyclo-2-heptene, Tricyclo-3-decene, Tricyclo-3-undecene, Tetracyclo-3-dodecene, Pentacyclo-4-pentadecene, Pentacyclopentadecadiene, Pentacyclo-3-pentadecene, Pentacyclo-4-hexadecene, Pentacyclo-3-hexadecene, Hexacyclo-4-heptadecene, Heptacyclo-5-eicosene, Heptacyclo-4-eicosene, Heptacyclo-5-heneicosene, Octacyclo-5-docosene, Nonacyclo-5-pentacosene, Nonacyclo-6-hexacosene, Cyclopentadien/Acenaphthylen-Addukte, 1,4-Methano-1.4.4a.9a-tetrahydrofluorene und 1,4-Methano-1.4.4a.5.10.10a-hexahydroanthracene, wie z.B. Bicyclo[2,2,1]-hept-2-en (Norbornen), Norbornadien, 5-Methyl-norbornen, 6-Methyl-norbornen, 5,6-Dimethyl-norbornen, 1-Methyl-norbornen, 5-Isobutyl-norbornen, 7-Methyl-norbornen, Tricyclo[4,3,0,1^{2,5}]-3-decen (5,6-Trimethylen-norbornen), Tricyclo[4,4,0,1^{2,5}]-3-undecen(5,6-Tetramethylen-norbornen), 10-Methyl-tricyclo[4,4,0,1^{2,5}]-3-undecen, 6-Ethylbicyclo[2.2.1]hept-2-en, 6-n-Butylbicyclo[2.2.1]hept-2-en, 6-Isobutylbicyclo[2.2.1]hept-2-en, 2-Methyltricyclo[4.3.0.1^{2,5}]-3-decen, 5-Methyltricyclo[4.3.0.1^{2,5}]-3-decen, Tricyclo[4.3.0.1^{2,5}]-3-undecen, Tricyclo[4,3,0,1^{2,5}]-3,7-decadien (Dicyclopentadien), Tricyclo[4,3,0,1^{2,5}]-3-decen, Tetracyclo[4,4,0,1^{2,5},1^{7,10}]-3-dodecen, 8-Methyl-tetracyclo[4,4,0,1^{2,5},1^{7,10}]-3-dodecen, 8-Cyclohexyl-tetracyclo[4,4,0,1^{2,5},1^{7,10}]-3-dodecen, 8-Stearyl-tetracyclo[4,4,0,1^{2,5},1^{7,10}]-3-dodecen, das 5,10-Dimethyl-, 2,10-Dimethyl-, 8,9-Dimethyl-, 11,12-Dimethyl-, 2,7,9-Trimethyl-, 9-Isobutyl-, 11,12-Dimethyl-, 8-Ethyliden-9-methyl, 8-Chlor-, 8-Brom- oder 8-Fluor-derival des Tetracyclo[4,4,0,1^{2,5},1^{7,10}]-3-dodecen, 8-Ethyltetracyclo[4.4.0.1^{2,5}.1^{7,10}]-3-dodecen, 8-Propyltetracyclo[4.4.0.1^{2,5}.1^{7,10}]-3-dodecen, 8-Butyltetracyclo[4.4.0.1^{2,5}.1^{7,10}]-3-dodecen, 8-Isobutyltetracyclo[4.4.0.1^{2,5}.1^{7,10}]-3-dodecen, 8-Hexyltetracyclo[4.4.0.1^{2,5}.1^{7,10}]-3-dodecen, 8-Methyl-9-ethyltetracyclo[4.4.0.1^{2.5}.1^{7,10}]-3-dodecen. 9-Ethyl-2,7-dimethyltetracyclo[4.4.0.1^{2,5}.1^{7,10}]-3-dodecen, 9-Isobutyl-2,7-dimethyltetracyclo[4.4.0. 1^{2,5}.1^{7,10}]-3-dodecen, 9,11,12-Trimethyltetracyclo[4.4.0.1^{2,5}.1^{7,10}]-3-dodecen, 9-Ethyl-11,12-dimethyltetracyclo[4.4.0.1^{2,5}.1^{7,10}]-3-dodecen, 9-Isobutyl-11,12-dimethyltetracyclo[4.4.0.1^{2,5}.1^{7,10}]-3-dodecen, 5,8,9,10-Tetramethyltetracyclo[4.4.0.1^{2,5}.1^{7,10}]-3-dodecen, 8-Ethylidentetracyclo[4.4.0. 1^{2,5}.1^{7,10}]-3-dodecen, 8-Ethyliden-9-methyltetracyclo[4.4.0.1^{2,5}.1^{7,10}]-3-dodecen, 8-Ethyliden-9-ethyltetracyclo[4.4.0.1^{2,5}.1^{7,10}]-3-dodecen, 8-Ethyliden-9-isopropyltetracyclo[4.4.0.1^{2,5}.1^{7,10}]-3-dodecen, 8-Ethyliden-8-butyltetracyclo[4.4.0.1^{2,5}.1^{7,10}]-3-dodecen, 8-n-Propylidentetracyclo[4.4.0.1^{2,5}.1^{7,10}]-3-dodecen, 8-n-Propyliden-9-methyltetracyclo[4.4.0.1^{2,5}.1^{7,10}]-3-dodecen, 8-n-Propyliden-9-ethyltetracyclo[4.4.0.1^{2,5}.1^{7,10}]-3-dodecen, 8-n-Propyliden-9-isopropyltetracyclo[4.4.0.1^{2,5}.1^{7,10}]-3-dodecen, 8-n-Propyliden-9-butyltetracyclo[4.4.0.1^{2,5}.1^{7,10}]-3-dodecen, 8-Isopropylidentetracyclo[4.4.0.1^{2,5}.1^{7,10}]-3-dodecen, 8-Isopropyliden-9-methyltetracyclo[4.4.0.1^{2,5}.1^{7,10}]-3-dodecen, 8-Isopropyliden-9-ethyltetracyclo[4.4.0.1^{2,5}.1^{7,10}]-3-dodecen, 8-Isopropyliden-9-isopropyltetracyclo[4.4.0.1^{2,5}.1^{7,10}]-3-dodecen, 8-Isopropyliden-9-butyltetracyclo[4.4.0.1^{2,5}.1^{7,10}]-3-dodecen, 8,9-Dichlortetracyclo[4.4.0.1^{2,5}.1^{7,10}]-3-dodecen, Pentacyclo[6,5,1,1^{3,6},0^{2,7},0^{9,13}]-4-pentadecen, Pentacyclo[7,4,0,1^{2,5},1^{9,12},0^{8,13}]-3-pentadecen, Pentacyclo[8,4,0,1^{2,5},1^{9,12},0^{8,13}]-3-hexadecen, 1,3-Dimethylpentacyclo[6.5.1.1^{3,6}.0^{2,7}.0^{9,13}]-4-pentadecen, 1,6-Dimethyl[6.5.1.1^{3,6}.0^{2,7}.0^{9,13}]-4-pentadecen, 14,15-Dimethyl[6.5.1.1^{3,6}.0^{2,7}.0^{9,13}]-4-pentadecen, Pentacyclo[7.4.0.1^{2,5}.1^{9,12}.0^{8,13}]-3-pentadecen, Methyl-substituierte Pentacyclo[7.4.0.1^{2,5}.1^{9,12}.0^{8,13}]-3-pentadecen, Pentacyclo[6.5.1.1^{3,6}.0^{2,7}.0^{9,13}]-4,10-pentadecadien, 11-Methylpentacyclo[8.4.0.1^{2,5}.1^{9,12}.0^{8,13}]-3-hexadecen, 11-Ethyl[8.4.0.1^{2,5}.1^{9,12}.0^{8,13}]-3-hexadecen, 10,11-Dimethyl[8.4.0.1^{2,5}.1^{9,12}.0^{8,13}]-3-hexadecen, Pentacyclo[6.6.1.1^{3,6}.0^{2,7}.0 ^{9,14}]-4-hexadecen, 1,3-Dimethylpentacyclo[6.6.1.1^{3,6}.0^{2,7}.0^{9,14}]-4-hexadecen, 15,16-Dimethylpentacyclo[6.6.1.1^{3,6}.0^{2,7}.0^{9,14}]-4-hexadecen, Hexacyclo[6,6,1,1^{3,6},1^{10,13},0^{2,7},0^{9,14}]-heptadecen, Heptacyclo[8,7,0,1^{2,9},1^{4,7},1^{11,17},0^{3,8},0^{12,16}]-5-eicosen, Heptacyclo[8,8,0,1^{4,7},1^{11,18},1^{13,16},0^{3,8}, 0^{12,17}]-5-heneicosen, 12-Methylhexacyclo[6.6.1.1^{3,6}.1^{10,13}.0^{2,7}.0^{9,14}]-4-heptadecen, 12-Ethylhexacyclo[6.6.1.1^{3,6}.1^{10,13}.0^{2,7}.0^{9,14}]-4-heptadecen, 12-Isobutylhexacyclo[6.6.1.1^{3,6}.1 ^{10,13}.0^{2,7}.0^{9,14}]-4-heptadecen, 1,6,10-Trimethylhexacyclo[6.6.1.1^{3,6}.1^{10,13}.0^{2,7}.0^{9,14}]-4-heptadecen, Heptacyclo[8.7.0.1^{3,6}.1^{10,17}.1^{12,15}.0^{2,7}.0^{11,16}]-4-eicosen und seine dimethylsubstituierten Derivate, Heptacyclo[8.8.0.1^{4,7}.1^{11,18}.1^{13,16}.0^{3,8}.0^{12,17}]-5-heneicosen und seine trimethylsubstituierten Derivate, 15-Methylheptacyclo[8.8.0.1^{4,7}.1^{11,18}.1^{13,16}.0^{3,8}.0^{12,17}]-5-heneicosen, 5-Phenyl-bicyclo[2.2.1]hept-2-en, 5-Methyl-5-phenyl-bicyclo[2.2.1]hept-2-en, 5-Benzyl-bicyclo[2.2.1]hept-2-en, 5-Tolyl-bicyclo[2.2.1]hept-2-en, 2-(Ethylphenyl)-bicyclo[2.2.1]hept-2-en, 5-(Isopropylphenyl)-bicyclo[2.2.1]hept-2-en, 5-Biphenyl-bicyclo[2.2.1]hept-2-en, 5-(ß-Naphthyl)-bicyclo[2.2.1]hept-2-en, 5-(α-Naphthyl)-bicyclo[2.2.1]hept-2-en, 5-(Anthracenyl)-bicyclo[2.2.1]hept-2-en, 5,6-Diphenyl-bicyclo[2.2. 1]hept-2-en, 1,4-Methano-1.4.4a.9a-tetrahydrofluoren, 1,4-Methano-1.4.4a.5.10.10a-hexahydroanthracen, 8-Phenyltetracyclo[4.4.0.1^{2,5}.1^{7,10}]-3-dodecen, 8-Methyl-8-phenyltetracyclo[4.4.0.1^{2,5}.1^{7,10}]-3-dodecen, 8-Benzyl-tetracyclo[4.4.0.1^{2,5}.1^{7,10}]-3-dodecen, 8-Tolyl-tetracyclo[4.4.0.1^{2,5}.1^{7,10}]-3-dodecen, 8-(Ethylphenyl)-tetracyclo[4.4.0. 1^{2,5}1^{7,10}]-3-dodecen, 8-(Isopropylphenyl)-tetracyclo[4.4.0.1^{2,5}.1^{7,10}]-3-dodecen, 8,9-Diphenyl-tetracyclo[4.4.0.1^{2,5}.1^{7,10}]-3-dodecen, 8-(Biphenyl)-tetracyclo[4.4.0.1^{2,5}.1^{7,10}]-3-dodecen, 8-(β-Naphthyl)-tetracyclo[4.4.0.1^{2,5}.1^{7,10}]-3-dodecen, 8-(α-Naphthyl)-tetracyclo[4.4.0.1^{2,5}.1^{7,10}]-3-dodecen und 8-(Anthracenyl)-tetracyclo[4.4.0.1^{2,5}.1^{7,10}]-3-dodecen.

Die mit den erfindungsgemäßen π-Komplex-Verbindungen durchzuführenden Homo- oder Copolymerisationen werden adiabatisch oder isotherm durchgeführt. Es handelt sich dabei um Hochdruckverfahren in Autoklaven oder Rohrreaktoren, um Lösungs- oder Hochtemperatur-Lösungs-Verfahren, um Polymerisationsverfahren in Masse, um Polymerisationsverfahren in der Slurry-Phase in Rührreaktoren oder Schlaufenreaktoren sowie um Verfahren in der Gasphase, wobei die Drücke für die Slurry-, Lösungs- und Gas-Phase im allgemeinen nicht über 65·10⁵ Pa (65 bar) hinausgehen. Alle diese Verfahren sind als solche lange bekannt und dem Fachmann geläufig. Es ist ein Vorteil der erfindungsgemäßen π-Komplex-Verbindungen, daß sie durch Auswahl der Substituenten sowohl als lösliche, gegebenenfalls auf Trägern aufgebrachte, als auch als unlösliche, heterogene π-Komplex-Verbindungen herstellbar sind.

Beispiele für Polymere, die mit den erfindungsgemäßen π-Komplex-Verbindungen herstellbar sind, sind hochdichtes lineares Polyethylen (HDPE), isotaktisches Polypropylen (iPP), syndiotaktisches Polypropylen (sPP), syndiotaktisches Polystyrol, i- oder s-Polybuten, -Polyhexen, Polyocten, Polybutadien, lineares niederdichtes Copolymer, z.B. Ethylen mit C₃-C₂₀-α-Olefin (Linear Low Density Polyethylene LLDPE), so Ethylen/Propylen, Ethylen/Butylen, Ethylen/Hexen, Ethylen/Octen, weiterhin etwa Propylen/Butylen, Propylen/Hexen, Ethylen/Styrol, Propylen/Styrol, Butadien-(1,3)/Ethylen, Butadien-(1,3)/Styrol, die analogen Isoprencopolymere und andere. Beispiele für gut zugängliche Terpolymere sind etwa Ethylen/Propylen/Ethyliden-Norbomen (ENB), Ethylen/Propylen/Dicyclopentadien, Ethylen/Propylen/Vinylnorbomen und Ethylen/Propylen/7-Methyl-octadien.

Die erfindungsgemäß einzusetzenden π-Komplex-Verbindungen ermöglichen durch die Donor-Akzeptor-Brücke eine definierte Öffnung des aktiven Zentrums, insbesondere auch für sterisch anspruchsvolle Monomere, wobei neben einer hohen Aktivität eine kontrollierte Selektivität, eine kontrollierte Molekulargewichtsverteilung und ein einheitlicher Einbau von (Co)Monomeren gewährleistet sind. Eine hohe Einheitlichkeit in der Molekulargewichtsverteilung ergibt sich weiterhin aus dem einheitlichen und definierten Ort der durch Einschub (Insertion) erfolgenden Polymerisation (Single Site Catalyst). Weiterhin werden durch die erfindungsgemäßen π-Komplex-Verbindungen Langkettenverzweigungen im Polymerisationsprozeß zugänglich, die eine verbesserte Rheologie bewirken.

Die D/A-Bindung kann eine Stabilisierung der Katalysatoren bis hin zu hohen Temperaturen bewirken, so daß die Katalysatoren auch im Hochtemperaturbereich eingesetzt werden können.

### Beispiele

Alle Reaktionen wurden unter streng anaeroben Bedingungen und unter Verwendung von Schlenk-Techniken bzw. der Hochvakuumtechnik durchgeführt. Die verwendeten Lösungsmittel waren trocken und mit Argon gesättigt. Chemische Verschiebungen δ sind in ppm angegeben, relativ zum jeweiligen Standard: ¹H(Tetramethylsilan), ¹³C(Tetramethylsilan), ³¹P(85%ige H₃PO₄), ¹¹B(Bortrifluorid-Etherat -18,1 ppm). Negative Vorzeichen bedeuten eine Verschiebung zu höherem Feld.

### Beispiel 1 (Bis-(trimethylsilyl)-cyclopentadien, Verbindung 1)

14,7 g (0,106 mol) Trimethylsilyl-cyclopentadien (bezogen von Fa. Fluka) und 150 ml Tetrahydrofuran (THF) wurden in einen Reaktionskolben gegeben und auf 0°C abgekühlt. Hierzu wurden 47,4 ml einer Lösung von Butyl-lithium in n-Hexan (2,3 molar; Gesamtmenge 0,109 mol) tropfenweise während 20 Minuten zugefügt. Nach vollständiger Zugabe wurde die gelbe Lösung für eine weitere Stunde gerührt; danach wurde das Kältebad entfernt. Bei Raumtemperatur wurde die Lösung für eine weitere Stunde gerührt und danach auf -20°C abgekühlt. Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und für eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4·10² Pa (0,4 mbar) 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Am. Chem. Soc, 102, (1980), 4429; J. Gen. Chem. USSR, Eng. Transl. 43 (1973), 1970; J. Chem. Soc., Dalton Trans. 1980, 1156)
¹H-NMR (400 MHz, C₆D₆): δ = 6,74 (m, 2H); 6,43 (m, 2H); -0,04 (s, 18H).

### Beispiel 2 (Diphenylphosphin-cyclopentadienyl-lithium, Verbindung 3)

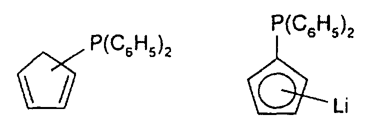

50 g (0,186 mol) Cyclopentadienyl-thallium (bezogen von Fa. Fluka) wurden gemeinsam mit 300 ml Diethylether in einen 500 ml-Kolben eingefüllt. Die Aufschlämmung wurde auf 0°C gekühlt und 34,2 ml (0,186 mol) Diphenylchlorphosphin innerhalb von 10 Minuten zugetropft. Die Aufschlämmung wurde danach auf Zimmertemperatur angewärmt und während einer Stunde gerührt und schließlich durch eine Fritte filtriert. Das Lösungsmittel wurde sodann im Vakuum abgezogen und hinterließ 39,5 g (85 % der theoretischen Ausbeute) des Zwischenproduktes Diphenylphosphino-cyclopentadien, Verbindung 2. Ein Anteil von 18,6 g (0,074 mol) der Verbindung 2 wurde sodann mit Toluol verdünnt und auf 0°C abgekühlt. Zu dieser Lösung wurden 33,2 ml einer 2,24-molaren Lösung von Butyl-lithium in Hexan (0,074 mol) während 10 Minuten zugegeben. Nach dem Anwärmen auf Raumtemperatur und nach Rühren während 2 Stunden ergab die gelbe Lösung einen Niederschlag, der filtriert und mit Toluol und anschließend mit Hexan gewaschen wurde. Nach dem Trocknen im Vakuum wurden 13,2 g der Verbindung 3 (70 % der theoretischen Ausbeute) als bräunliches Pulver erhalten (vgl. J. Am. Chem. Soc. 105 (1983); 3882; Organometallics 1 (1982), 1591).
¹H-NMR (400 MHz, d₈THF): δ = 7,3 (m, 4H); 7,15 (m, 6H); 5,96 (m, 2H); 5,92 (m, 2H), ³¹P-NMR (161,9 MHz, d₈THF): δ = -20.

### Beispiel 3 (Tributylstannyl-diphenylphosphino-inden, Verbindung 4)

10 g (0,086 mol) Inden wurden in einen Rundkolben gegeben, mit 200 ml Diethylether verdünnt und auf -20°C gekühlt. Zu dieser Lösung wurden 36 ml einer 2,36-molaren Lösung von Butyl-lithium (0,085 mol) in n-Hexan gegeben, wobei die Lösung sofort eine gelbe Farbe annahm. Das Kältebad wurde entfernt, und man ließ das Reaktionsgemisch auf Raumtemperatur erwärmen und rührte das Reaktionsgemisch während einer weiteren Stunde. Danach wurde das Reaktionsgemisch wieder auf 0°C abgekühlt, und 19 g (15,9 ml, 0,086 mol) Diphenylchlorphosphin wurden unter Bildung eines Niederschlags zugegeben. Das Kältebad wurde wieder entfernt, und die Lösung konnte sich auf Zimmertemperatur erwärmen, während für eine weitere Stunde nachgerührt wurde. Die Lösung wurde dann erneut auf -20°C gekühlt, und 36 ml (0,085 mol) Butyl-lithium in n-Hexan wurden zugetropft. Nach beendeter Zugabe wurde das Kältebad wieder entfernt, und die Temperatur stieg auf Raumtemperatur; die Lösung wurde für weitere 1,5 Stunden nachgerührt. Die Aufschlämmung wurde dann wiederum auf 0°C gekühlt und 28 g (0,086 mol) Tributylzinnchlorid wurden tropfenweise zugefügt. Die erhaltene Aufschlämmung wurde auf Raumtemperatur erwärmt und für weitere 1,5 Stunden gerührt, danach durch eine Fritte filtriert und das Lösungsmittel im Vakuum entfernt. Es hinterblieben 46,9 g der Verbindung 4 (92 % der theoretischen Ausbeute) als ein schweres gelbes Öl.
¹H-NMR (400 MHz, CDCl₃): δ = 7,5 - 7,3 (m, 6H); 7,28 (br s, 6H); 7,14 (pseudo-d t, 7,3 Hz/1,0 Hz, 1H); 7,08 (t, J = 7,3 Hz, 1H); 6,5 (br m, 1H); 4,24 (br s, 1H); 1,4 - 1,25 (m, 6H); 1,25 - 1,15 (m, 6H); 0,82 (t, J = 7,2 Hz, 9H); 0,53 (t, J = 8 Hz, 6H). ³¹P-NMR (161,9 MHz, CDCl₃): δ = -20,6.

### Beispiel 4 (Diphenylphosphino-indenyl-zirkoniumtrichlorid, Verbindung 5)

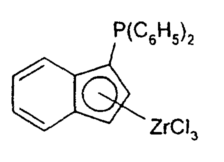

Eine Lösung von 37 g (0,0628 mol) der Verbindung 4 in 300 ml Toluol wurde während 3 Stunden zu einer Aufschlämmung von 14,6 g ZrCl₄ (99,9 %ig, 0,0628 mol, bezogen von Fa. Aldrich) in 100 ml Toluol bei Raumtemperatur gegeben. Die Lösung wurde sofort rot und ging langsam in orange und schließlich in gelb über. Nach 4-slündigem Nachrühren wurde der gelbe Niederschlag abfiltriert und mit Toluol und dann mit Hexan gewaschen. Der Feststoff wurde im Vakuum getrocknet und ergab 15,3 g (50 % der theoretischen Ausbeute) der Verbindung 5 als ein frei fließendes gelbes Pulver. Die Ausbeute ließ sich ohne weiteres auf über 70 % steigern, wenn man bei tieferer Temperatur arbeitete, z.B. 30 min bei -30°C und 5 Stunden bei 0°C. Das Produkt konnte weiter gereinigt werden, indem man restliche Zinnverbindung unter Benutzung von Pentan in einem Soxhlet-Extraktor auswusch (Extraktionszeit: 8 Stunden).

### Beispiel 5 (N,N-Dimethyl-O-(methylsulfonyl)-hydroxylamin, Verbindung 6)

(CH₃)₂NOSO₂CH₃ 6

9,0 g N,N-Dimethyl-O-hydroxylamin-hydrochlorid (0,092 mol) wurden in 70 ml CH₂Cl₂ suspendiert, das 20 g Triethylamin (0,2 mol) enthielt, und auf -10°C gekühlt. 9,5 g Methylsulfonylchlorid (0,083 mol), gelöst in 70 ml CH₂Cl₂, wurden langsam zur gekühlten Suspension getropft. Nach vollständiger Zugabe wurde 1 h nachgerührt. Danach wurde Eiswasser zum Reaktionsgemisch gegeben und die organische Phase abgetrennt. Das übriggebliebene Wasser wurde mit Ether gewaschen. Waschether und die CH₂Cl₂-Fraktion wurden vereinigt, über Na₂SO₄ getrocknet, und die Lösungsmittel wurden im Vakuum bei -10°C entfernt. Es hinterblieben 5,9 g (46 % der theoretischen Ausbeute) an Verbindung 6 als Öl, das bei -20°C aufbewahrt wurde.Vgl. Angew. Chem., Int. Ed. Engl. 17 (1978), 687.
¹H-NMR (400 MHz, CDCl₃): δ = 3,03 (s, 3H), 2,84 (s, 6H).

### Beispiel 6 (N,N-Dimethylamino-cyclopentadienyl-lithium, Verbindung 7)

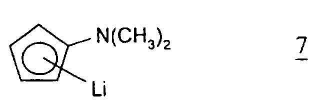

Eine Lösung von 3 g Cyclopentadienyl-lithium (0,042 mol) in 30 ml THF wurde bei -30°C langsam zu einer Lösung von 5,9 g der Verbindung 6 (0,042 mol) in 20 ml THF gegeben. Das Gemisch wurde dann auf -20°C erwärmt und 30 min gerührt. Dann wurde Hexan zugegeben und die Lösung filtriert. Danach wurden 1,8 ml einer 2,3-molaren Lösung von Butyl-lithium (0,042 mol) in Hexan bei -20°C zugesetzt, wodurch ein Niederschlag entstand. Der Niederschlag wurde abfiltriert und 2 mal mit je 20 ml Hexan gewaschen. Nach Trocknung im Vakuum erhielt man 2,0 g (40 % der theoretischen Ausbeute) der Verbindung 7 als weißes Pulver.Vgl. Angew. Chem., Int. Ed. Engl. 19 (1980), 1010.
¹H-NMR (400 MHz, THF): δ = 5,34 (br d, J = 2,2 Hz, 2H); 5,15 (br d, J = 2,2 Hz, 2H); 2,56 (s, 6H).

### Beispiel 7 (Tributylstannyl-diisopropylphosphin-inden, Verbindung 8)

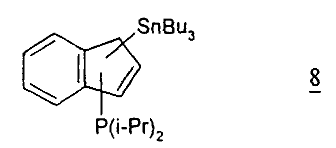

In einen Rundkolben, der 3,8 g (0,033 mol) Inden enthielt, wurden 100 ml Ether gcgeben; es wurde auf -20°C gekühlt. Zu dieser Lösung wurden 14,4 ml einer 2,3 molaren Lösung von Butyl-lithium in Hexan (0,033 mol) innerhalb 5 Minuten gegeben, wobei eine gelbe Lösung entstand. Nach Entfernung des Kältebades wurde die Lösung auf Raumtemperatur erwärmt und 1,5 h nachgerührt. Danach wurde das Reaktionsgemisch auf 0°C abgekühlt und 5,0 g Chlordiisopropylphosphin (0,033 mol) zugegeben, wodurch ein Niederschlag entstand. Nach Entfernung des Kältebades wurde die Lösung auf Raumtemperatur erwärmt und 1 h gerührt. Danach wurde die Lösung auf -20°C gekühlt und 14,4 ml einer 2,3 molaren Lösung von Butyl-lithium in Hexan (0,033 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 10,1 g Chlortributylzinn (0,031 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. zur Trockne eingeengt, wobei 16.6 g der Verbindung 8 (Ausbeute: 97 %) als schweres gelbes Öl übrigblieben. Zwei Isomere wurden in einem Verhältnis von 1,5:1 erhalten. Das Hauptisomer wurde wie folgt identifiziert: ¹H-NMR (400 MHz, CD₂Cl₂): δ = 7,71 (d, J = 7,2 Hz, 1H); 7,41 (d, J= 7,3 Hz, 1H); 7,13 (m, 2H); 6,96 (m, 1H); 4,28 (s mit Sn Satelliten, 1 H); 2,21 (m, 1H); 1,54 (m, 1H); 1,45 - 0.65 (m, 39H). ³¹P-NMR (161,9 MHz, CD₂Cl₂): δ = -11,3 ppm. Das Nebenisomer wurde wie folgt identifiziert: ¹H-NMR (400 MHz, CD₂Cl₂): δ = 7,6 (d, J = 7,4 Hz, 1H); 7,46 (d, J = 7,2 Hz, 1H); 7,26 (t, J = 7,5 Hz, 1 H); 7,1 (m, 1H); 6,71 (m, 1H); 3,48 (m, 1H); 2,21 (m, 1H); 1,54 (m, 1H); 1,45 - 0,65 (m, 39H). ³¹P-NMR (161,9 MHz, CD₂Cl₂): d = -1,5 ppm.

### Beispiel 8 (Diisopropylphosphino-indenyl-zirkoniumtrichlorid, Verbindung 9)

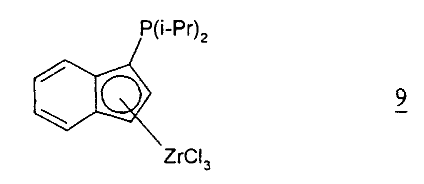

Eine Lösung von 15,0 g der Verbindung 8 (0,029 mol) in 50 ml Toluol wurde zu einer Aufschlämmung von 6,7 g (0,029 mol) 99,9 %igem ZrCl₄ in 300 ml Toluol bei -78°C gegeben. Nach vollständiger Zugabe wurde das Reaktionsgemisch 0,5 h bei -30°C und anschließend 4 h bei 0°C gerührt. Der entstehende gelbe Niederschlag wurde abfiltriert und mit Toluol und Hexan gewaschen. Die Feststoffe wurden i. Vak. getrocknet, wobei 8,8 g der Verbindung 9 (Ausbeute: 71 %) als freifließendes gelbes Pulver übrigblieben. Das Pulver wurde durch Entfernung der verbliebenen Zinnverbindungen mittels Extraktion mit unter Rückfluß geführtem Toluol über einen Zeitraum von 3 h bei 40·10² Pa (30 mm Hg) und danach mit Pentan über einen Zeitraum von 2 h in einem Soxhlet-Extraktor weitergereinigt. Wegen der Unlöslichkeit der entstehenden Verbindung wurde kein ¹H-NMR erhalten.

### Beispiel 9 (Tributylstannyl-dimethylphosphino-inden, Verbindung 10)

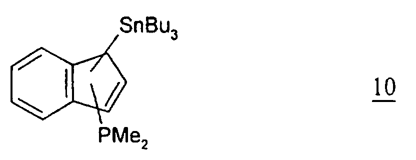

In einen Rundkolben, der 5,5 g (0,047 mol) Inden enthielt, wurden 150 ml Ether gegeben; es wurde auf -20°C abgekühlt. Zu dieser Lösung wurden 20,8 ml einer 2,3 molaren Lösung von Butyl-lithium in Hexan (0,048 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf -30°C wurden 4,6 g Chlordimethylphosphin (0,048 mol) in 30 ml Ether innerhalb 20 min zugegeben, wobei ein Niederschlag entstand. Nach 2-stündigem Rühren bei -20°C wurden 20,8 ml einer 2,3 molaren Lösung von Butyl-lithium in Hexan (0,048 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 15,6 g Chlortributylzinn (0,048 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. zur Trockne eingeengt, wobei 17,4 g der Verbindung 10 (Ausbeute: 78 %) als schweres gelbes Öl übrigblieben. ¹H-NMR (400 MHz, CD₂Cl₂): δ = 7,67 (d, J = 7,5 Hz, 1H); 7,47 (d, J = 7,4 Hz, 1H); 7,18 (m, 2H); 6,83 (m, 1H); 4,28 (s mit Sn-Satelliten, 1 H); 1,43 - 0,78 (m, 33H). ³¹P-NMR (161,9 MHz, CD₂Cl₂): δ = -61,6 ppm.

### Beispiel 10 (Dimethylphosphino-indenyl-zirconiumtrichlorid, Verbindung 11)

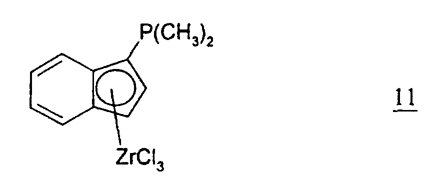

Zu einer Aufschlämmung von 8,5 g (0,036 mol) 99,9 %igem ZrCl₄ in 200 ml Toluol wurde eine Lösung von 17,0 g der Verbindung 10 (0,037 mol) in 50 ml Toluol bei -78°C gegeben. Nach vollständiger Zugabe wurde das Reaktionsgemisch 0,5 h bei -30°C und danach 4 h bei 0°C gerührt. Der entstehende gelbe Niederschlag wurde abfiltriert und mit Toluol und Hexan gewaschen. Die Feststoffe wurden in Vak. getrocknet, wobei 8,3 g der Verbindung 11 (Ausbeute: 61 %) als freifließendes gelbes Pulver übrigblieb. Das Pulver wurde durch Entfernung der verbliebenen Zinnverbindungen mittels Extraktion mit unter Rückfluß geführtem Toluol über einen Zeitraum von 3 h bei 40·10² Pa (30 mm Hg) und danach mit Pentan über einen Zeitraum von 2 h in einem Soxhlet-Extraktor weitergereinigt, wobei 7,2 g (Ausbeute: 53 %) des Produktes übrigblieben. Wegen der Unlöslichkeit dieser Verbindung wurde kein ¹H-NMR erhalten.

### Beispiel 11 (2-Methylinden, Verbindung 13)

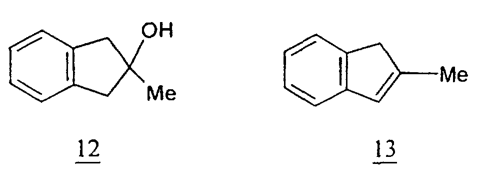

In einen Rundkolben wurden 38,7 g (0,29 mol) 2-Indanon und 300 ml Ether gegeben. In einen zweiten Kolben wurden 96,7 ml einer 3,0 molaren Lösung von CH₃MgI in Ether (0,29 mol), die mit 150 ml Ether verdünnt war, gegeben. Danach wurde die 2-Indanon-Lösung zu der CH₃MgI-Lösung über eine Kanüle in einer solchen Menge gegeben, daß der Rückfluß aufrechterhalten wurde, wobei ein Niederschlag entstand. Nach vollständiger Zugabe wurde die Aufschlämmung weitere 4 h unter Rückfluß gerührt und auf 0°C abgekühlt, wonach 100 ml einer gesättigten Lösung von NH₄Cl langsam zugegeben wurden. Das Produkt wurde mit Ether extrahiert und über MgSO₄ getrocknet. Nach Entfernung des Lösungsmittels i. Vak. wurden 30,1 g (Ausbeute: 70 %) 2-Methyl-2-indanol (Verbindung 12) als öliger Feststoff erhalten. ¹H-NMR (400 MHz, CDCl₃): δ = 7,15 (br m, 4H); 3,01 (s, 2H); 2,99 (s, 2H); 1,5 (s, 3H); OH variabel.

In einen Rundkolben mit einem Dean-Stark-Auffanggefäß wurden 25,5 g (0,17 mol) der Verbindung 12, 3,2 g (0,017 mol) *p*-Toluolsulfonsäure und 500 ml Hexan gegeben. Diese Aufschlämmung wurde 3 h unter Rückfluß gehalten. Nach Abkühlung wurde die Hexanfraktion von den unlöslichen Produkten dekantiert und das Lösungsmittel i. Vak. entfernt, wobei ein Öl übrigblieb, das anschließend in einer kurzen Destillationskolonne bei 45°C und 3 Pa (0,03 mbar) destilliert wurde, wodurch 15 g (Ausbeute: 68 %) der Verbindung 13 erhalten wurden. ¹H-NMR (400 MHz, CDCl₃): δ = 7,33 (d, J = 7,6 Hz, 1H); 7,21 (m, 2H); 7,06 (pseudo d t, J = 7,2, 1,4 Hz, 1 H); 6,45 (br s, 1H); 3,25 (s, 2H); 2,12 (s, 3 H).

Es wird verwiesen auf:
1. Morrison, H.; Giacherio, D. *J. Org. Chem*. **1982**, *47*, 1058.
2. Ready, T. E.; Chien, J. C. W.; Rausch, M. D. *J. Organom*. *Chem*. *519,* **1996,** 21.
3. Wilt, Pawlikowki, Wieczorek. *J. Org. Chem. 37,* **1972**, 824.

### Beispiel 12 (Tributylstannyl-diisopropylphosphino-2-methylinden, Verbindung 14)

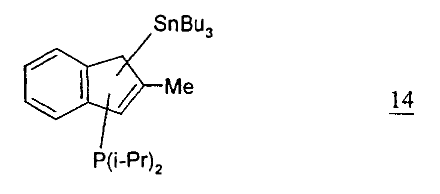

In einen Rundkolben, der 5,08 g (0,039 mol) 2-Methylinden 13 enthielt, wurden 150 ml Ether gegeben; es wurde auf -20°C abgekühlt. Zu dieser Lösung wurden 17,0 ml einer 2,3-molaren Lösung von Butyl-lithium in Hexan (0,039 mol) innerhalb 5 min gegeben, wobei eine gelbe Lösung entstand. Nach Entfernung des Kältebades wurde die Lösung auf Raumtemperatur erwärmt und 1 h nachgerührt. Danach wurde das Reaktionsgemisch auf -20°C gekühlt, und es wurden 5,8 g (0,039 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf -20°C wurden 17,0 ml einer 2,3 molaren Lösung von Butyl-lithium in Hexan (0,039 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C, wurden 12,4 g (0,038 mol) Chlorotributylzinn zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. zur Trockne eingeengt, wobei 20.4 g (Ausbeute: 98 %) der Verbindung 14 als schweres gelbes Öl übrigblieben. Zwei Isomere wurden durch ³¹P-NMR identifiziert. ³¹P-NMR (161,9 MHz, CD₂Cl₂): δ = -5,9 und -6,6 in einem Verhältnis von 2:1.

### Beispiel 13 (Diisopropylphosphino-2-methylindenyl-zirkonium-trichlorid, Verbindung 15)

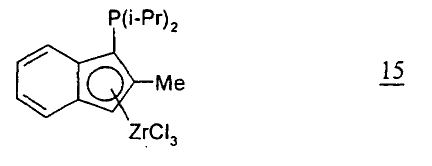

Eine Lösung von 17.7 g (0,033 mol) der Verbindung 14 in 100 ml Methylenchlorid wurde zu einer Aufschlämmung von 7,7 g (0,033 mol) 99,9 %igem ZrCl₄ in 200 ml Methylenchlorid innerhalb 10 min bei -25°C gegeben. Nach vollständiger Zugabe wurde das Reaktionsgemisch langsam auf 10°C über einen Zeitraum von 3 h erwärmt, wonach eine klare, orangefarbene Lösung entstand. Nach 1 h bei Raumtemperatur wurde das Lösungsmittel i. Vak. entfernt und das enstehende Öl mit 2 x 50 ml Hexan gewaschen, wodurch ein öliges Rohprodukt (15) erhalten wurde, das direkt weiterverarbeitet wurde. Wegen der Unlöslichkeit dieser Verbindung wurde kein ¹H- NMR erhalten.

### Beispiel 14 (Bis(trimethylsilyl)-(diphenylphosphino)-cyclopentadien, Verbindung 16)

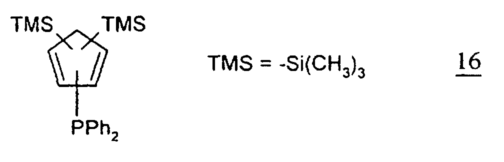

76,6 ml einer 2,5-molaren Lösung von Butyl-lithium in Hexan (0,19 mol) wurden zu einer Lösung der Verbindung 1 (40,2 g; 0,19 mol) in 500 ml Ether innerhalb 10 min bei 0°C gegeben. Nach vollständiger Zugabe wurde das Bad entfernt und die Lösung 1 h bei Raumtemperatur gerührt. Nach Abkühlung auf 0°C, wurden 42,2 g (0,19 mol) Chlordiphenylphosphin innerhalb 10 min zugegeben, wonach das Bad entfernt und die Aufschlämmung auf Raumtemperatur erwärmt wurde. Nach 1-stündigem Rühren bei Raumtemperatur wurde der Ether i. Vak. entfernt und das Produkt in Hexan erneut aufgelöst. Nach Abfiltrieren der Salze wurde das Hexan i. Vak. entfernt, wobei 69,1 g (Ausbeute: 91 %) der Verbindung 16 als Öl übrigblieben. ¹H-NMR (400 MHz, CDCl₃): δ = 7,45 (m, 4H); 7,35 (m, 6H); 6,8 (m, 1H); 6,65 (m, 1H); 6,6 (m, 1H); 0 (s, 18 H). ³¹P-NMR (161,9 MHz, CDCl₃): δ = -19,5 ppm.

### Beispiel 15 (Trimethylsilyl-diphenylphosphino-cyclopentadienyl-zirkoniumtrichlorid, Verbindung 17)

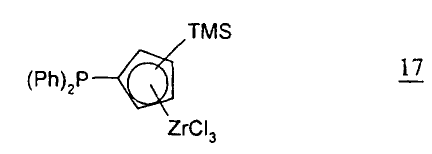

Eine Lösung der Verbindung 16 (69,1 g, 0,175 mol) in 200 ml Methylenchlorid wurde über eine Kanüle zu einer Suspension von 41,5 g (0,178 mol) 99,9 %igem ZrCl₄ in 200 ml Methylenchlorid gegeben und 8 h bei Raumtemperatur gerührt. Während dieser Zeit trübte sich die Lösung. Die Feststoffe wurden abfiltriert, mit 2 x 20 ml Toluol und anschließend 2 x 20 ml Hexan gewaschen und i. Vak. getrocknet. Das Produkt bestand aus 35 g (Ausbeute: 39 %) eines hellgelben Pulvers. Wegen der Unlöslichkeit des Produktes wurde kein ¹H-NMR erhalten.

### Beispiel 16 (Diisopropylphosphino-cyclopentadienyl-lithium, Verbindung 18)

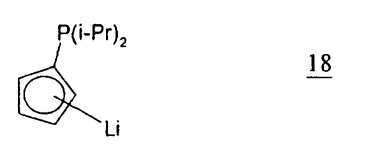

In einen Rundkolben, der 1,68 g (0,023 mol) Cyclopentadienyl-lithium enthielt, wurden 50 ml Ether gegeben. Nach Abkühlung des Reaktionskolbens auf -20°C wurden 3,6 g (0,023 mol) Chlordiisopropylphosphin zugetropft. Nach vollständiger Zugabe wurde das Kältebad auf 0°C erwärmt und das Reaktionsgemisch 1 h gerührt. Danach wurde Ether i. Vak. entfernt und das Produkt in Toluol gelöst und abfiltriert. Nach Durchspülen der Fritte mit 2 x 10 ml Toluol wurde das Reaktionsgemisch auf-20°C abgekühlt und 9,3 ml einer 2,5 molaren Lösung von Butyllithium in Hexan (0,023 mol) zugegeben, wobei eine orangefarbene Lösung entstand. Eine kleine Fraktion wurde für NMR-Untersuchungen entnommen und nach Abtrennung des Toluols i. Vak. und Waschen des entstehenden Öls mit Hexan ein hellgelber Feststoff (18) erhalten. ¹H-NMR (400 MHz, THF): δ = 5,89 (m, 2H); 5,83 (br s, 2H); 1,86 (m, 2 H); 1,0 - 0,8 (m, 12H).

### Beispiel 17 (Dimethylphosphino-tributylstannyl-2-methylinden, Verbindung 19)

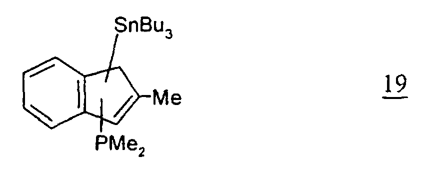

In einen Rundkolben, der 6,76 g (0,052 mol) 2-Methylinden (Verbindung 13) enthielt, wurden 100 ml Ether gegeben; es wurde auf -20°C gekühlt. Zu dieser Lösung wurden 21ml einer 2,5 molaren Lösung von Butyl-lithium in Hexan (0,052 mol) innerhalb 5 min gegeben, wobei eine gelbe Lösung entstand. Nach Entfernung des Kältebades wurde die Lösung auf Raumtemperatur erwärmt und 1 Stunde nachgerührt. Nach Abkühlung des Reaktionsgemisches auf -20°C wurden 5,0 g (0,052 mol) Chlordimethylphosphin innerhalb 5 min zugegeben, wobei ein Niederschlag entstand. Anschließend wurde das Kältebad entfernt und das Reaktionsgemisch 1 h bei Raumtemperatur gerührt. Nach Abkühlung auf -20°C wurden 21,0 ml einer 2,5 molaren Lösung von Butyl-lithium in Hexan (0,052 mol) zugetropft. Nach vollständiger Zugabe wurde das Kältebad entfernt, woraufhin die Lösung langsam auf Raumtemperatur erwärmt und 1,5 h gerührt wurde. Nach Abkühlung der Aufschlämmung auf 0°C wurden 16,9 g (0,052 mol) Chlortributylzinn zugetropft.

Die entstehende Aufschlämmung wurde auf Raumtemperatur erwärmt und 1,5 h gerührt. Nach Entfernung des Ethers i. Vak. wurde das Rohprodukt erneut in Hexan aufgelöst, abfiltriert und das Filtrat i. Vak. zur Trokne eingeengt, wobei 24,3 g (Ausbeute: 98 %) der Verbindung 19 als schweres gelbes Öl übrigblieben. ³¹P-NMR (161,9 MHz, CD₂Cl₂): δ = -68,5 (s).

### Beispiel 18 (Dimethylphosphino-2-methylindenyl-zirkoniumtrichlorid, Verbindung 20)

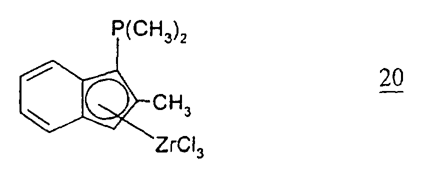

Eine Lösung von 17,4 g (0,036 mol) der Verbindung 19 in 100 ml Toluol wurde zu einer Aufschlämmung von 8,5 g (0,036 mol) 99,9 %igem ZrCl₄ in 100 ml Toluol innerhalb 10 min bei 0°C gegeben. Nach vollständiger Zugabe wurde das Reaktionsgemisch langsam auf 10°C über einen Zeitraum von 1 h erwärmt und danach 6 h bei Raumtemperatur gerührt. Anschließend wurde der gelbe Niederschlag abfiltriert, mit 2 x 20 ml Toluol und 2 x 20 ml Hexan gewaschen und i. Vak. getrocknet. Das Pulver wurde durch Entfernung der verbliebenen Zinnverbindungen mittels Extraktion mit unter Rückfluß geführtem Toluol über einen Zeitraum von 3 h bei 40·10² Pa (30 mm Hg) und danach mit Pentan über einen Zeitraum von 2 h in einem Soxhlet-Extraktor weitergereinigt, wobei 5,8 g (Ausbeute: 41 %) der Verbindung 20 als leuchtend gelbes Pulver übrigblieben. Wegen der Unlöslichkeit dieser Verbindung wurde kein ¹H-NMR erhalten.

### Beispiel 19 (4,7-Dimethylinden, Verbindung 21)

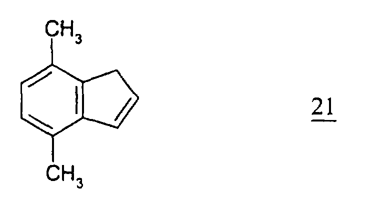

Verwiesen wird auf: Erker, G. et al. *Tetrahedron* **1995**, *51*, 4347.

Eine 30 %ige Lösung von 153 g (2,8 mol) Natriummethoxid in Methanol wurde mit 60 ml Methanol verdünnt und auf 0°C abgekühlt. Zu dieser Lösung wurden 34 g (0,52 mol) Cyclopentadien gegeben. Nach 15 min wurden 39 g (0,34 mol) 2,5-Hexandion zugetropft, wonach das Kältebad entfernt und das Reaktionsgemisch 2 h bei Raumtemperatur gerührt wurde. Anschließend wurden 200 ml Wasser und 200 ml Ether zugegeben. Die Etherschicht wurde entfernt, mit Wasser und Kochsalzlösung gewaschen und anschließend über Na₂SO₄ getrocknet. Nach Entfernung des Lösungsmittels i. Vak. und Destillation bei 65°C und 0,1·10² Pa (0,1 mbar) verblieb die Verbindung 21 als orangefarbenes Öl (40 g; Ausbeute: 81 %). ¹H-NMR (400 MHz, CDCl₃): δ = 7,35 - 7,27 (m, 2H): 7,23 (d, J = 7,6 Hz, 1H); 6,82 (m, 1H): 3,51 (s, 2 H); 2,75 (s, 3H); 2,63 (s, 3 H).

### Beispiel 20 (Diisopropylphosphino-tributylstannyl-4,7-dimethylinden, Verbindung 22)

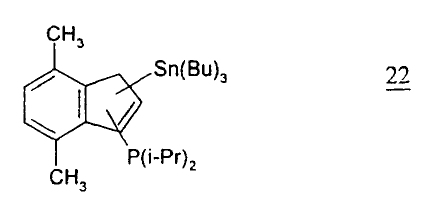

In einen Rundkolben, der 5,0 g (0,035 mol) 4,7-Dimethylinden (Verbindung 21) enthielt, wurden 100 ml Ether gegeben; es wurde auf -20°C abgekühlt. Zu dieser Lösung wurden 14 ml einer 2,5 molaren Lösung von Butyl-lithium in Hexan (0,035 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf -20°C wurden 5,3 g (0,035 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf -20°C wurden 14,0 ml einer 2,5 molaren Lösung von Butyl-lithium in Hexan (0,035 mol) zugetropft. Nach vollständiger Zugabe wurde das Kältebad entfernt, die Lösung langsam auf Raumtemperatur erwärmt und 1,5 h gerührt. Nach Abkühlung der Aufschlämmung auf 0°C wurden 11,4 g Chlortributylzinn (0,035 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, filtriert und das Filtrat i. Vak.eingeengt, wobei 16 g (Ausbeute: 83%) der Verbindung 22 als schweres gelbes Öl übrigblieben. ³¹P-NMR (161,9 MHz, CD₂Cl₂): δ = -9 ppm.

### Beispiel 21 (Diisopropylphosphino-4,7-dimethylindenyl-zirkonium-trichlorid, Verbindung 23)

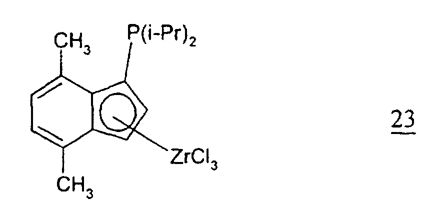

Eine Lösung von 16,0 g (0,029 mol) der Verbindung 22 in CH₂Cl₂ (100 ml) wurde zu einer Aufschlämmung von 6,4 g (0,029 mol) 99,9 %igem ZrCl₄ in 100ml CH₂Cl₂ bei -20°C innerhalb 10 min gegeben. Nach vollständiger Zugabe wurde das Reaktionsgemisch langsam über einen Zeitraum von zwei Stunden auf Raumtemperatur erwärmt und anschließend weitere 2 h bei Raumtemperatur gerührt. Danach wurden die Feststoffe durch Filtration entfernt und das Lösungsmittel i. Vak. entfernt, wobei die Rohverbindung 23 als Öl übrigblieb.

### Beispiel 22 (Pyrrol-lithium, Verbindung 24)

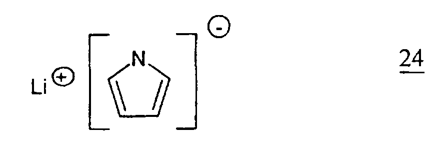

59 ml einer Lösung von Butyl-lithium (2,5 molar in Hexan, 0,148 mol) wurden langsam bei -20°C zu einer Lösung von 9,9 g Pyrrol (0,148 mol) in 200 ml Hexan gegeben, wobei sich ein weißer Festkörper bildete. Es wurde 2 Stunden bei Zimmertemperatur nachgerührt und der Festkörper durch Filtration gewonnen, 2 mal mit je 20 ml Hexan gewaschen und im Vakuum getrocknet. Dies Verfahren ergab 6 g der Verbindung 24 (56 % der theoretischen Ausbeute).
¹H-NMR (400 MHz, THF): δ = 6,71 (s, 2H), 5,95 (s, 2H).

### Beispiel 23 (1-Phenyl-2,3,4,5-tetramethyl-phosphol, Verbindung 25)

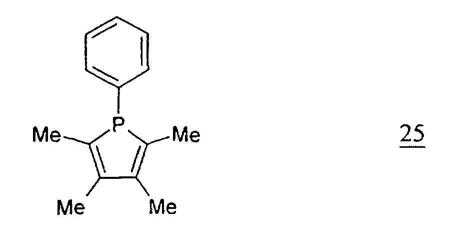

In Anlehnung an Organometallics 7 (1988), 921 wurde eine Lösung von 11,7 g (0,216 mol) 2-Butin in 150 ml CH₂Cl₂ langsam zu 15,3 g (0,115 mol) AlCl₃ in CH₂Cl₂ gegeben (0°C; 30 Min.). Es wurde 45 Minuten bei 0°C nachgerührt, dann das Kältebad entfernt und eine weitere Stunde nachgerührt. Danach wurde die Lösung auf -50°C gekühlt und eine Lösung von 21,4 g (0,12 mol) Phenyl-dichlorphosphin in CH₂Cl₂ während 20 Minuten zugegeben. Das Kältebad wurde danach entfernt, die dunkelrote Lösung eine Stunde nachgerührt und dann bei -30°C zu einer Lösung von 27 g (0,13 mol) Tributylphosphin in 100 ml CH₂Cl₂ gegeben. Die rote Farbe verschwand sofort; es hinterblieb eine gelbe Lösung. Nachdem die Zugabe beendet war, wurde das Lösungsmittel im Vakuum entfernt; es blieb ein dickes gelbes Öl. Das Öl wurde in Hexan aufgenommen und unter Ar-Atmosphäre mit gesättigter wäßriger NaHCO₃-Lösung und H₂O gewaschen. Nach Trocknung über MgSO₄ wurde das Hexan im Vakuum entfernt. Es hinterblieben 18,2 g der Verbindung 25 als klares Öl (Ausbeute 78 %). ¹H-NMR (400 MHz, CDCl₃): δ = 7,3 (m, 5H); 2,0 (m, 12H).³¹P-NMR (161,9 MHz, CDCl₃): δ = 16,8 ppm.

### Beispiel 24 (Lithium-2,3,4,5-tetramethyl-phosphol, Verbindung 26)

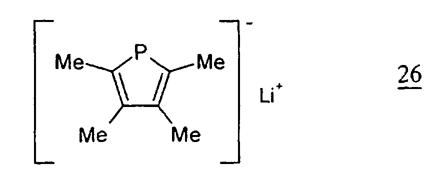

In Anlehnung an Organometallics 7 (1988), 921 wurden 0,52 g (0,074 mol) Lithium zu einer Lösung von 7 g (0,032 mol) der Verbindung 33 in 150 ml Tetrahydrofuran (THF) gegeben und über Nacht gerührt. Die erhaltene rote Lösung wurde zur Entfernung restlicher Feststoffe durch eine Fritte filtriert und das Filtrat auf 0°C gekühlt. Danach wurde eine Lösung von 1,45 g (0,01 mol) AlCl₃ in 20 ml THF zugetropft und die Lösung auf Raumtemperatur gebracht. Eine aliquote Menge wurde zur Analyse entnommen und die restliche Lösung direkt zur weiteren Verwendung benutzt. ³¹P-NMR (161,9 MHz, THF): δ = 63,7 ppm.

### Beispiel 25 (Tributylstannyl-diethylphosphino-2-methylinden, Verbindung 27)

Es wurde analog Beispiel 3 gearbeitet, nur wurde an Stelle von 0,086 mol Inden 0,086 mol 2-Methylinden zugegeben.

### Beispiel 26 (Diethylphosphino-2-methylinden-zirkoniumtrichlorid, Verbindung 28)

Es wurde analog Beispiel 4 gearbeitet, jedoch wurde statt Toluol CH₂Cl₂ als Lösungsmittel benutzt. Die Reaktionstemperatur war 25°C. Die Reinigung erfolgte durch Soxhlet-Extraktion mit CH₂Cl₂. Verbindung 28 wurde als unlöslicher gelber Feststoff in 78 % der theoretischen Ausbeute erhalten.

### Beispiel 27 (Katalysator-Herstellung)

Diphenyl-methyl-phosphonium-cyclopentadienid (Ph₂MePcp) wurde in Diethylether bei -20°C als rote Suspension mit einer äquimolaren Menge Butyl-Lithium zum Ylidanion Ph₂P(cp)(CH₂)⁻Li⁺ umgesetzt. Es wurde ein weiteres Äquivalent BuLi zugesetzt, 1 Stunde bei -20°C und anschließend 1 Stunde bei Raumtemperatur (RT) gerührt. Die gelbe, leicht trübe Lösung wurde wieder auf -20°C abgekühlt und vorsichtig 1 Äquivalent ZrCl₄ als THF-Komplex zugegeben. Nach 2 Stunden hatte sich ein schmutzig gelber Feststoff gebildet, der nach Isolierung und Trocknung im Vakuum zur Polymerisation eingesetzt wurde.

### Beispiel 28 (Ethylenpolymeriation)

In einen im Vakuum ausgeheizten 300 ml V4A-Stahlautoklaven wurden 100 ml trockenes, Argon-gesättigtes Toluol überführt, 5 bar Ethen aufgedrückt, auf 90°C aufgeheizt und der Katalysator (2,5 µmol des Rohkatalysators von Beispiel 27 in 2,1 ml Toluol) mit 2,5 mmol Methylalumoxan (10 %ig in Toluol, 15 Minuten bei RT präformiert) mittels Druckschleuse zugegeben. Nach 1 Stunde wurde die Polymerisation mit 5 ml Ethanol unterbrochen, der Autoklav entspannt, der Autoklaveninhalt in 500 ml Ethanol/konzentrierte Salzsäure (90/10) 1 Stunde ausgerührt, das Polymerisat durch Filtration isoliert, mit Ethanol säurefrei gewaschen und im Vakuumtrockenschrank bei 90°C bis zur Gewichtskonstanz getrocknet.
Polymerausbeute: 1,9 g
Katalysatoraktivität: 0,8 Tonnen PE pro mol Katalysator und Stunde
Grenzviskosität: 3,27 dl/g (ortho-Dichlorbenzol, 140°C)
DSC (2. Aufheizung): Tₘ = 141°C, ΔHₘ = 189 J/g

### Beispiel 29 (Ethen/1-Hexen-Copolymerisation)

Es wurde wie in Beispiel 28 verfahren, wobei 50 ml Toluol und 50 ml 1-Hexen mit ca. 120°C Badtemperatur unter 5 bar Ethen aufgeheizt wurden und 5 µmol des präformierten Katalysators von Beispiel 28 eingesetzt und der Innendruck mit Ethen auf konstant 12,5·10⁵ Pa (12,5 bar) eingestellt wurde. Die Polymerausbeute nach 1 Stunde betrug 5,3 g, entsprechend einer Katalysator-Aktivität von ca. 1 Tonne LLDPE pro mol Katalysator und Stunde.
Die Grenzviskosität, gemessen in ODCB bei 140°C betrug 0,71 dl/g.
Die DSC-Messung in der 2. Aufheizung ergab Tₘ = 108°C und ΔHₘ = 87 J/g.

## Patentansprüche

1. π-Komplex-Verbindungen von Übergangsmetallen der Formeln 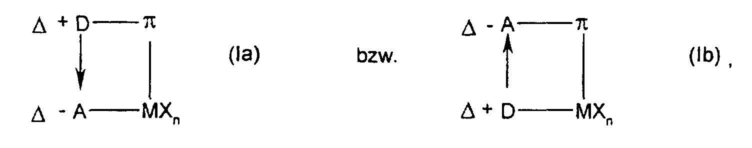 worin
π ein geladenes oder elektrisch neutrales π-System darstellt, das ein- oder zweifach mit ungesättigten oder gesättigten Fünf- oder Sechsringen kondensiert sein kann und dessen H-Atome in der kondensierten oder nicht-kondensierten Form teilweise oder vollständig durch gleiche oder verschiedene Reste aus der Gruppe von nicht verzweigtem oder verzweigtem C₁-C₂₀-(Cyclo)Alkyl, C₁-C₂₀-Halogen(cyclo)alkyl, C₂-C₂₀-(Cyclo)Alkenyl, C₁-C₂₀-(Cyclo)Alkoxy, C₇-C₁₅-Aralkyl, C₆-C₁₂-Aryl oder ein- oder zweifach durch D oder A ersetzt sein können,
D ein Donoratom bedeutet, das im Falle der Teilstruktur (Ia) Substituent oder Teil des π-Systems ist oder über einen Spacer mit dem π-System verbunden ist und im Falle der Teilstruktur (Ib) an das Übergangsmetall gebunden ist,
A ein Akzeptoratom bedeutet, das im Falle der Teilstruktur (Ia) an das Übergangsmetall gebunden ist und im Falle der Teilstruktur (Ib) Substituent oder Teil des π-Systems ist oder über einen Spacer mit dem π-System verbunden ist,
wobei die Anbindung von D bzw. A an das Übergangsmetall entweder direkt oder über einen Spacer erfolgt, wobei D und A über eine koordinative Bindung derart verknüpft sind, daß das Donoratom eine positive (Teil)Ladung und das Akzeptoratom eine negative (Teil)Ladung annehmen und wobei D und A ihrerseits Substituenten tragen können,
M für ein Übergangsmetall der III. Bis VIII. Nebengruppe des Periodensystems der Elemente (Mendelejew) einschließlich der Lanthaniden und der Actiniden, bevorzugt der III. Bis VI. Nebengruppe einschließlich der Lanthaniden und Ni, steht,
X ein Anionenäquivalent bedeutet und
n in Abhängigkeit von den Ladungen von M und von π die Zahl Null, Eins, Zwei, Drei oder Vier bedeutet
und wobei D und A im einzelnen wie folgt definiert sind:
i) im Rahmen der Formel (Ia) bedeuten
D über einen Spacer oder direkt an π gebundenen zweifach substituierten N, P, As, Sb der Bi oder einfach substituierten O, S, Se oder Te und
A über einen Spacer oder direkt an M gebundenes B, Al, Ga oder In; oder
ii) im Rahmen der Formel (Ia) bedeuten D und A gemeinsam eine der über Spacer oder direkt an π bzw. M gebundenen Gruppen 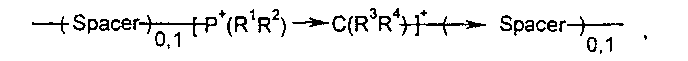 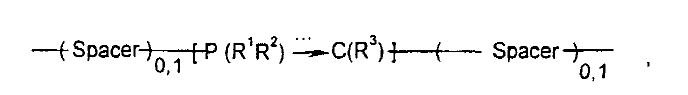 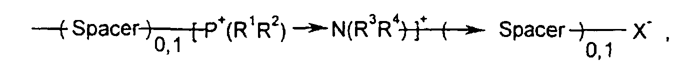 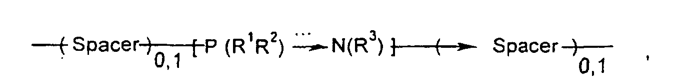 oder 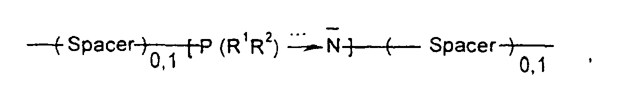 die Phosphoniumsalze, Phosphorylide, Aminophosphoniumsalze und Phosphinimine darstellen,
oder die entsprechenden Ammoniumsalze und Stickstoffylide, Arsoniumsalze und Arsenylide, Sulfoniumsalze und Schwefelylide, Seleniumsalze und Selenylide, die entsprechenden Aminoarsoniumsalze und Arsinimine, Aminosulfoniumsalze und Sulfimine, Aminoseleniumsalze und Selenimine, 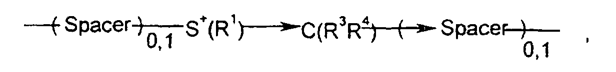 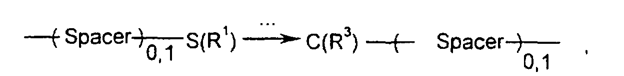 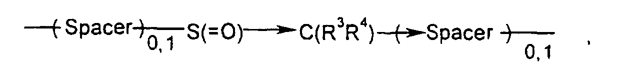 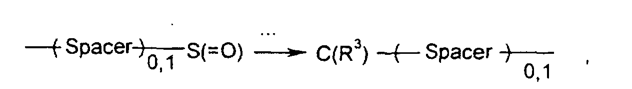 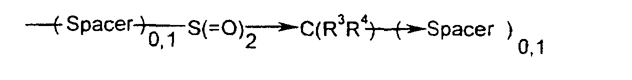 und die entsprechenden Sulfiminstrukturen; oder
iii) im Rahmen der Formel (Ib) bedeuten
D über einen Spacer oder direkt an M gebundenen zweifach substituierten N, P, As, Sb oder Bi oder einfach substituierten O, S, Se oder Te und
A über einen Spacer oder direkt an π gebundenes zweifach substituiertes Al, Ga oder In oder über einen Spacer an π gebundenes zweifach substituiertes B;
wobei R¹, R², R³ oder R⁴ und der Begriff "substituiert" unabhängig voneinander C₁-C₂₀-(Cyclo)-alkyl, C₁-C₂₀-Halogen-(cyclo)alkyl, C₂-C₂₀-(Cyclo)alkenyl, C₇-C₁₅-Aralkyl, C₆-C₁₂-Aryl, C₁-C₂₀-(Cyclo)alkoxy, C₇-C₁₅-Aralkoxy, C₆-C₁₂-Aryloxy, Indenyl, Halogen, 1-Thienyl, disubstituiertes Amino, trisubstituiertes Silyl, das über -CH₂-angebunden sein kann, oder Phenyl-acetylenyl bedeuten und "Spacer" eine zweibindige Silyl-, Germanyl-, Amino-, Phosphino-, Methylen-, Ethylen-, Propylen-, Disilylethylen- oder Disiloxangruppe bedeutet, die 1- bis 4fach durch C₁-C₄-Alkyl, Phenyl oder C₄-C₆-Cycloalkyl substituiert sein kann, und das Element P, N, As, S bzw. Se über den Spacer oder direkt an π gebunden ist und wobei in dem Fall, daß D Teil des π-Systems ist, zwischen A und M ein Spacer angeordnet ist und wobei in den Fällen i) und ii) als Spacer auch -C(R¹)= auftritt.

2. Verwendung der π-Komplex-Verbindungen von Übergangsmetallen gemäß Anspruch 1 als Katalysatoren in Verfahren zur Homo- oder Copolymerisation von Monomeren aus der Gruppe der C₂-C₁₂-α-Olefine, der C₄-C₃₀-Cycloolefine, der C₂-C₈-Alkine, der C₄-C₈-Diolefine, der C₄-C₈-Vinylyester und der C₈-C₁₂-Vinylaromaten, in der Gas-, Lösungs-, Hochtemperatur-Lösungs-, Masse-, Hochdruck- oder Slurry-Phase bei -60°C bis +250°C und 0,5 bis 5000 bar und in Gegenwart oder Abwesenheit von gesättigten oder aromatischen Kohlenwasserstoffen oder von gesättigten oder aromatischen Halogenkohlenwasserstoffen sowie in Gegenwart oder Abwesenheit von Wasserstoff, wobei die π-Komplex-Verbindungen in einer Menge von 10⁻¹² bis 10⁻¹ mol pro mol Monomere eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann.

3. π-Komplex-Verbindungen nach Anspruch 1, **dadurch gekennzeichnet, daß** das π-System ein Cyclopentadienylgerüst aus der Gruppe von Cyclopentadien, substituiertem Cyclopentadien, Inden, substituiertem Inden, Fluoren und substituiertem Fluoren bedeutet, in welchem je Cyclopentadienring bzw. je ankondensiertem Benzolring 1 bis 4 Substituenten aus der Gruppe von C₁-C₂₀-(Cyclo)Alkyl, C₁-C₂₀-(Cyclo)Alkoxy, Halogen, C₆-C₁₂-Aryl, D und A vorliegen, wobei D und A die in Anspruch 1 genannte Bedeutung haben und wobei ankondensierte aromatische Ring teilweise oder vollständig hydriert sein können.

4. π-Komplex-Verbindungen nach Ansprüchen 1 und 3, **dadurch gekennzeichnet, daß** als Donoratom D ein Elemente aus der Gruppe N, P, As, O, S, Se, bevorzugt N, P, vorliegt.

5. π-Komplex-Verbindungen nach Ansprüchen 1, 3 und 4, **dadurch gekennzeichnet, daß** als Akzeptoratom A ein Element aus der Gruppe B, AI, Ga und In, bevorzugt B, Al und Ga vorliegt.

6. π-Komplex-Verbindungen nach Ansprüchen 1 und 3 bis 5, **dadurch gekennzeichnet, daß** Donor-Akzeptor-Bindungen aus der Gruppe von N→B, N→Al, P→B, P→Al, O→B, O→Al, C=O→B, C=O→Al vorliegt.

7. π-Komplex-Verbindungen nach Ansprüchen 1 und 3 bis 6, **dadurch gekennzeichnet, daß** M für Sc, Y, La, Sm, Nd, Lu, Ti, Zr, Hf, Th, V, Nb, Ta, Cr, bevorzugt für Ti, Zr, Hf, V, Nb oder Ta, besonders bevorzugt für Ti, Zr oder Hf steht.

8. Verwendung der π-Komplex-Verbindungen nach Anspruch 2, **dadurch gekennzeichnet, daß** die π-Komplex-Verbindungen gemeinsam mit einem Aluminoxan, Alan oder Alanat, einem Boran oder Borat und gegebenenfalls weiteren Cokatalysatoren und/oder Metallalkylen als Katalysatorsystem eingesetzt werden.

9. Verwendung der π-Komplex-Verbindungen nach Ansprüchen 2 und 8, **dadurch gekennzeichnet, daß** Reaktionsprodukte der Formeln 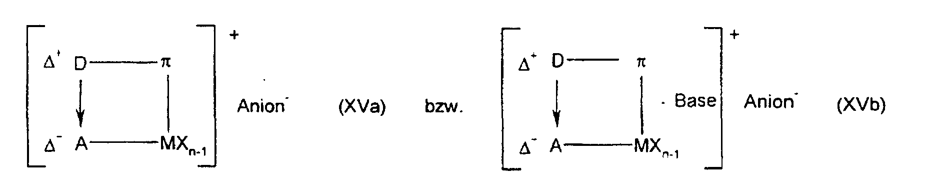 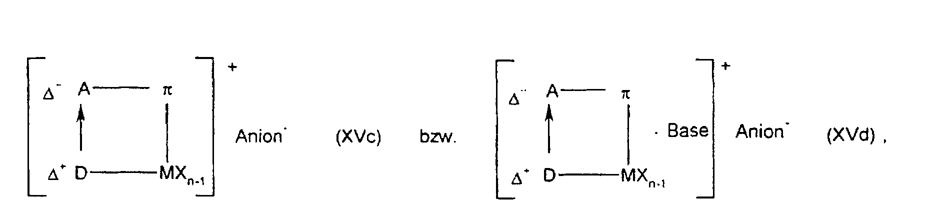 in denen
Anion für das gesamte sperrige, schlecht koordinierende Anion und
Base für eine Lewis-Base stehen,
eingesetzt werden.

10. Verwendung der π-Komplex-Verbindungen nach Ansprüchen 2, 8 und 9 für die Herstellung von HDPE, LLDPE mit Butylen, Hexen oder Octen als Comonomer und Terpolymeren..

## Claims

1. A π complex compound of transition metals of the formula 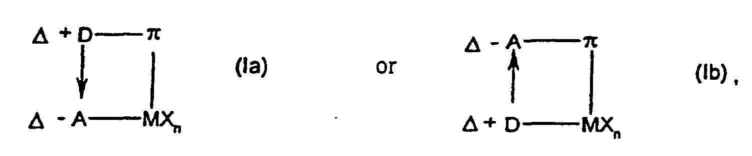 in which
π is a charged or electrically neutral π system which can be fused to one or two unsaturated or saturated five-membered or six-membered rings, and whose H atoms, in the fused or non-fused form, can be partially or completely replaced with identical or different radicals from the group comprising unbranched or branched C₁-C₂₀-(cyclo)alkyl, C₁-C₂₀-halogeno(cyclo)alkyl, C₂-C₂₀-(cyclo)alkenyl, C₁-C₂₀-(cyclo)alkoxy, C₇-C₁₅-aralkyl and C₆-C₁₂-aryl, or replaced in one or two instances with D or A,
D is a donor atom which, in the case of partial structure (Ia), is a substituent or part of the π system or is bonded to the π system via a spacer and, in the case of partial structure (Ib), is bonded to the transition metal,
A is an acceptor atom which, in the case of partial structure (Ia), is bonded to the transition metal and, in the case of partial structure (Ib), is a substituent or part of the π system or is bonded to the π system via a spacer,
the bonding of D or A to the transition metal taking place either directly or via a spacer, D and A being linked via a coordinate bond in such a way that the donor atom takes on a (partial) positive charge and the acceptor atom a (partial) negative charge, and it being possible for D and A in turn to carry substituents,
M is a transition metal of subgroup III to VIII of the periodic table of the elements (Mendeleeff), including the lanthanides and actinides, preferably of subgroup III to VI, including the lanthanides, and Ni,
X is one anion equivalent and
n is the number zero, one, two, three or four, depending on the charges of M and π,
D and A being specifically defined as follows:
i) in formula (Ia):
D is disubstituted N, P, As, Sb or Bi or monosubstituted O, S Se or Te, bonded to π via a spacer or directly, and
A is B, Al, Ga or In, bonded to M via a spacer or directly; or
ii) in formula (Ia), D and A together are one of the following groups bonded to π or M via a spacer or directly: 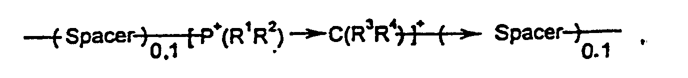 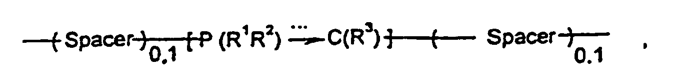 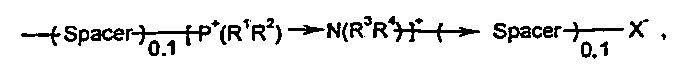 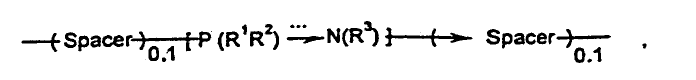 or 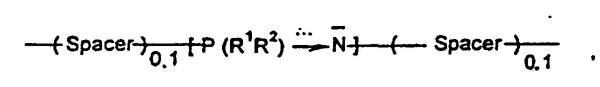 which represent phosphonium salts, phosphorus ylides, aminophosphonium salts and phosphinimines,
or the corresponding ammonium salts and nitrogen ylides, arsonium salts and arsenic ylides, sulfonium salts and sulfur ylides, selenium salts and selenium ylides, the corresponding aminoarsonium salts and arsinimines, aminosulfonium salts and sulfimines, aminoselenium salts and selenimines, 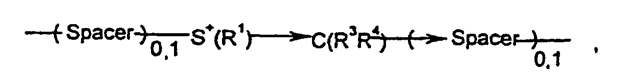 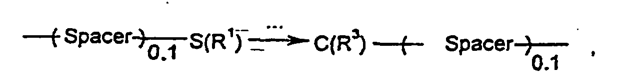 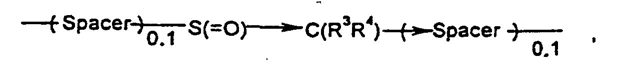 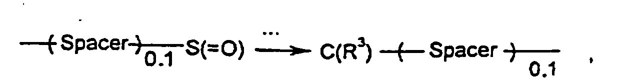 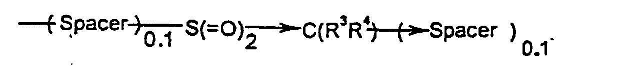 and the corresponding sulfimine structures; or
iii) in formula (Ib):
D is disubstituted N, P, As, Sb or Bi or monosubstituted O, S, Se or Te, bonded to M via a spacer or directly, and
A is disubstituted Al, Ga or In, bonded to π via a spacer or directly, or disubstituted B, bonded to π via a spacer,
R¹, R², R³ or R⁴ and the expression "substituted" independently of one another are C₁-C₂₀-(cyclo)alkyl, C₁-C₂₀-halogeno(cyclo)alkyl, C₂-C₂₀-(cyclo)alkenyl, C₇-C₁₅-aralkyl, C₆-C₁₂-aryl, C₁-C₂₀-(cyclo)alkoxy, C₇-C₁₅-aralkoxy, C₆-C₁₂-aryloxy, indenyl, halogen, 1-thienyl, disubstituted amino, trisubstituted silyl which can be bonded via-CH₂-, or phenylacetylenyl, and "Spacer" is a divalent silyl, germanyl, amino, phosphino, methylene, ethylene, propylene, disilylethylene or disiloxane group which can be monosubstituted to tetrasubstituted by C₁-C₄-alkyl, phenyl or C₄-C₆-cycloalkyl, and the element P, N, As, S or Se is bonded to π via the spacer or directly, a spacer being arranged between A and M in the case where D is part of the π system, and -C(R¹)= also occurring as a spacer in cases i) and ii).

2. Use of the π complex compound of transition metals according to Claim 1 as catalysts in processes for the homopolymerization or copolymerization of monomers from the group comprising C₂-C₁₂-α-olefins, C₄-C₃₀-cycloolefins, C₂-C₈-alkynes, C₄-C₈-diolefins, C₄-C₈-vinyl esters and C₈-C₁₂-vinylaromatics, in the gas, solution, high-temperature solution, bulk, high-pressure or slurry phase, at -60°C to +250°C and 0.5 to 5000 bar, in the presence or absence of saturated or aromatic hydrocarbons or saturated or aromatic halogenohydrocarbons, and in the presence or absence of hydrogen, the π complex compounds being used in an amount of 10⁻¹² to 10⁻¹ mole per mole of monomers, and it also being possible for the polymerization to be carried out in the presence of Lewis acids, Brönsted acids or Pearson acids or additionally in the presence of Lewis bases.

3. A π complex compound according to Claim 1, **characterized in that** the π system is a cyclopentadienyl skeleton from the group comprising cyclopentadiene, substituted cyclopentadiene, indene, substituted indene, fluorene and substituted fluorene, in which 1 to 4 substituents from the group comprising C₁-C₂₀-(cyclo)alkyl, C₁-C₂₀-(cyclo)alkoxy, halogen, C₆-C₁₂-aryl, D and A are present per cyclopentadiene ring or per fused benzene ring, D and A being as defined in Claim 1 and it being possible for fused aromatic rings to be partially or completely hydrogenated.

4. A π complex compound according to Claims 1 and 3, **characterized in that** an element from the group comprising N, P, As, O, S and Se, preferably N and P, is present as the donor atom D.

5. A π complex compound according to Claims 1, 3 and 4, **characterized in that** an element from the group comprising B, Al, Ga and In, preferably B, Al and Ga, is present as the acceptor atom A.

6. A π complex compound according to Claims 1 and 3 to 5, **characterized in that** donor-acceptor bonds from the group comprising N→B, N→Al, P→B, P→Al, O→B, O→Al, C=O→B and C=O→Al are present.

7. A π complex compound according to Claims 1 and 3 to 6, **characterized in that** M is Sc, Y, La, Sm, Nd, Lu, Ti, Zr, Hf, Th, V, Nb, Ta or Cr, preferably Ti, Zr Hf, V, Nb or Ta and particularly preferably Ti, Zr or Hf.

8. Use of the π complex compound according to Claim 2, **characterized in that** the π complex compound is used together with an aluminoxane, alane or alanate, a borane or borate and optionally other cocatalysts and/or metal alkyls as the catalyst system.

9. Use of the π complex compound according to Claims 2 and 8, **characterized in that** reaction products of the formulae 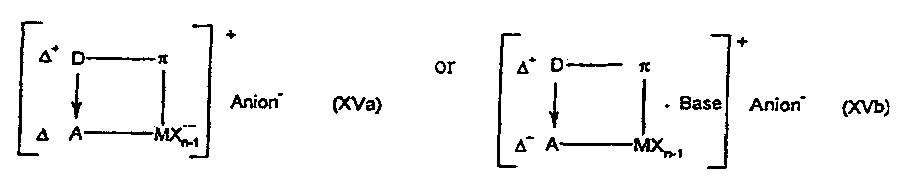 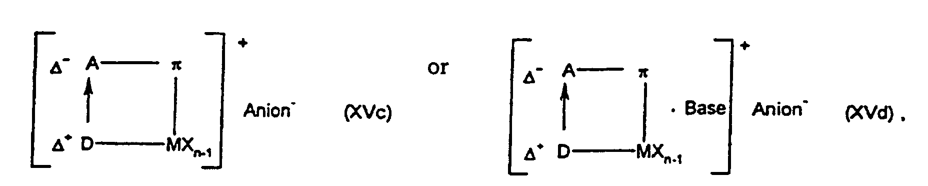 in which
Anion represents the entire bulky, poorly coordinating anion and
Base represents a Lewis base,
are used.

10. Use of the π complex compound according to Claims 2, 8 and 9 for the preparation of HDPE, LLDPE with butylene, hexene or octene as comonomer, and terpolymers.

## Revendications

1. Complexes de métaux de transition, de type π, répondant aux formules respectives 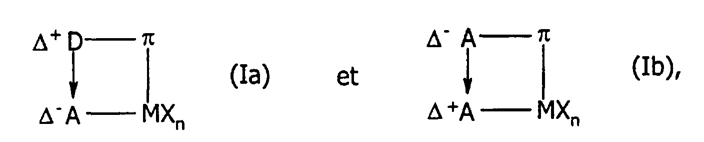 dans lesquelles
π représente un système π chargé électriquement ou neutre, qui peut être condensé une ou deux fois avec des cycles insaturés ou saturés à 5 ou 6 chaînons et dont les atomes d'hydrogène à l'état condensé ou non condensé peuvent être remplacés en totalité ou en partie par des radiaux identiques ou différents choisis parmi les radicaux (cyclo)alkyle en C₁-C₂₀ à chaîne droite ou ramifiée, halogéno(cyclo)alkyle en C₁-C₂₀, (cyclo)alcényle en C₂-C₂₀, (cyclo)alcoxy en C₁-C₂₀, aralkyle en C₇-C₁₅, aryle en C₆-C₁₂ ou une ou deux fois par D ou A,
D représente un atome donateur qui, dans le cas de la structure partielle (Ia), est substituant ou partie du système π ou relié par un espaceur au système π, et dans le cas de la structure partielle (Ib) est relié au métal de transition,
A représente un atome accepteur qui, dans le cas de la structure partielle (Ia), est relié au métal de transition et dans le cas de la structure partielle (Ib), est substituant ou partie du système π ou relié au système π par l'intermédiaire d'un espaceur,
la liaison de D ou A au métal de transition étant directe ou se faisant par l'intermédiaire d'un espaceur, D et A étant reliés par une liaison de coordination en sorte que l'atome donateur prenne une charge (partielle) positive et l'atome accepteur une charge (partielle) négative, D et A pouvant eux-mêmes porter des substituants,
M représente un métal de transition des sous-groupes III à VIII de la Classification Périodique des éléments (Mendeleïev) y compris les lanthanides et les actinides, de préférence des sous-groupes III à VI, y compris les lanthanides et Ni,
X représente un équivalent d'un anion et
n selon les charges de M et de π, est égal à 0, 1, 2, 3 ou 4,
D et A étant définis en détail de la manière suivante :
i) dans le cadre de la formule (Ia),
D représente N, P, As, Sb ou Bi disubstitué ou O, S, Se ou Te, monosubstitué, relié à π directement ou par l'intermédiaire d'un espaceur et
A représente B, Al, Ga ou In relié à M directement ou par l'intermédiaire d'un espaceur ; ou bien
ii) dans le cadre de la formule (Ia), D et A représentent ensemble, l'un des groupes suivants, reliés respectivement à π ou M directement ou par l'intermédiaire d'un espaceur : 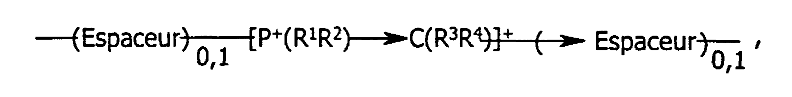 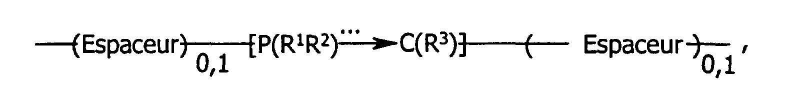 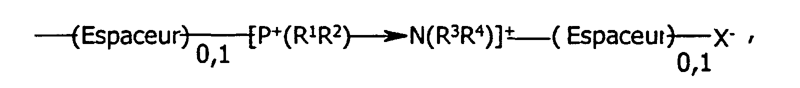 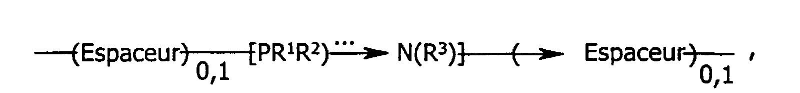 ou 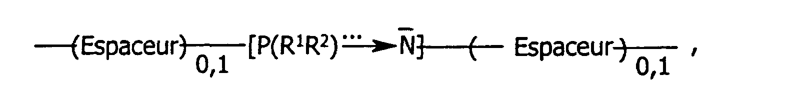 les sels de phosphonium, phosphorylides, sels d'aminophosphonium et phosphonimines,
ou bien les sels d'ammonium correspondants et azotylides, les sels d'arsonium et arsénylides, les sels de sulfonium et sulfurylides, les sels de sélénium et sélénylides, les sels d'aminoarsonium correspondants et arsinimines, les sels d'aminosulfonium et sulfimines, les sels d'aminosélénium et sélénimines, 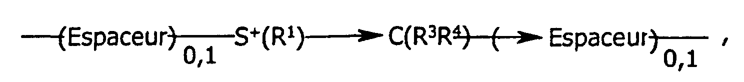 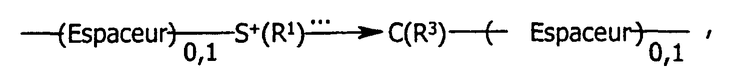 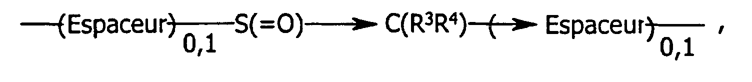 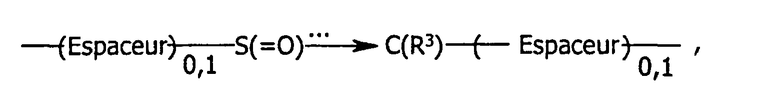 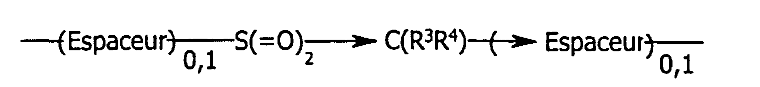 et les structures de sulfimines correspondantes ; ou bien
iii) dans le cadre de la formule (Ib),
D représente N, P, As, Sb ou Bi disubstitué ou O, S, Se ou Te monosubstitué, relié à M directement ou par l'intermédiaire d'un espaceur et
A représente Al, Ga ou In disubstitué relié à π directement ou par l'intermédiaire d'un espaceur, ou B disubstitué relié à π par l'intermédiaire d'un espaceur ;
R¹, R², R³ ou R⁴ et l'expression "substitué" s'appliquant, indépendamment les uns des autres, à des groupes (cyclo)alkyle en C₁-C₂₀, halogéno(cyclo)alkyle en C₁-C₂₀, (cyclo)alcényle en C₂-C₂₀, aralkyle en C₇-C₁₅, aryle en C₆-C₁₂, (cyclo)alcoxy en C₁-C₂₀, aralcoxy en C₇-C₁₅, aryloxy en C₆-C₁₂, indényle, les halogènes, les groupes 1-thiényle, amino disubstitué, silyle trisubstitué qui peut être relié par l'intermédiaire de -CH₂-, ou phényl-acétylényle et l'expression "espaceur" s'appliquant à un groupe divalent silyle, germanyle, amino, phosphino, méthylène, éthylène, propylène, disilyléthylène ou disiloxane qui peut porter 1 à 4 substituants alkyle en C₁-C₄, phényle ou cycloalkyle en C₄-C₆, l'élément P, N, As, S ou Se étant relié à π directement ou par l'intermédiaire d'un l'espaceur ; et dans le cas où D est partie du système π, il y a entre A et M un espaceur, l'espaceur pouvant également consister en -C(R¹)= dans les cas i) et ii).

2. Utilisation des complexes de métaux de transition de type π selon la revendication 1, en tant que catalyseurs dans des opérations d'homo- ou co-polymérisation de monomères du groupe des α-oléfines en C₂-C₁₂, des cyclooléfines en C₄-C₃₀, des alcynes en C₂-C₈, des dioléfines en C₄-C₈, des esters vinyliques en C₄-C₈ et des dérivés vinylaromatiques en C₈-C₁₂, en phase gazeuse, en solution, en solution à haute température, en masse, sous haute pression ou en dispersion à des températures allant de -60 à 250°C et des pressions allant de 0,5 à 5000 bars et en présence ou en l'absence d'hydrocarbures saturés ou aromatiques ou d'hydrocarbures halogénés saturés ou aromatiques et en présence ou en l'absence d'hydrogène, les complexes de type π étant mis en oeuvre en quantité de 10⁻¹² à 10⁻¹ mol par mole des monomères, les opérations pouvant être réalisées en présence d'acides de Lewis, d'acides de Brönstedt ou d'acides de Pearson ou encore en présence de bases de Lewis.

3. Complexes de type π selon la revendication 1, **caractérisés en ce que** le système π consiste en un squelette cyclopentadiénylique du groupe du cyclopentadiène, des cyclopentadiènes substitués, de l'indène, des indènes substitués, du fluorène et des fluorènes substitués, avec 1 à 4 substituants choisis parmi les groupes (cyclo)alkyle en C₁-C₂₀, (cyclo)alcoxy en C₁-C₂₀, les halogènes, les groupes aryle en C₆-C₁₂, D et A par cycle cyclopentadiène et par cycle benzénique condensé, D et A ayant les significations indiquées dans la revendication 1, le cycle aromatique condensé pouvant être hydrogéné en totalité ou en partie.

4. Complexes de type π selon les revendications 1 et 3, **caractérisés en ce que** l'atome donateur D est un élément du groupe formé par N, P, As, O, S, Se, de préférence par N, P.

5. Complexes de type π selon les revendications 1, 3 et 4, **caractérisés en ce que** l'atome accepteur A est un élément du groupe B, Al, Ga et In, de préférence B, Al et Ga.

6. Complexes de type π selon les revendications 1 et 3 à 5, **caractérisés en ce que** les liaisons donateur-accepteur sont choisies parmi N→B, N→Al, P→B, P→Al, O→B, O→Al, C=O→B, C=O→Al.

7. Complexes de type π selon les revendications 1 et 3 à 6, **caractérisés en ce que** M représente Sc, Y, La, Sm, Nd, Lu, Ti, Zr, Hf, Th, V, Nb, Ta, Cr, de préférence Ti, Zr, Hf, V, Nb ou Ta, et plus spécialement Ti, Zr ou Hf.

8. Utilisation des complexes de type π selon la revendication 2, **caractérisée en ce qu'**on les met en oeuvre avec un aluminoxane, un alane, ou un alanate, un borane ou un borate et le cas échéant d'autres catalyseurs auxiliaires et/ou métaux-alkyles en tant que systèmes catalyseurs.

9. Utilisation des complexes de type π selon les revendications 2 et 8, **caractérisée en ce que** l'on met en oeuvre des produits de réaction de formules respectives 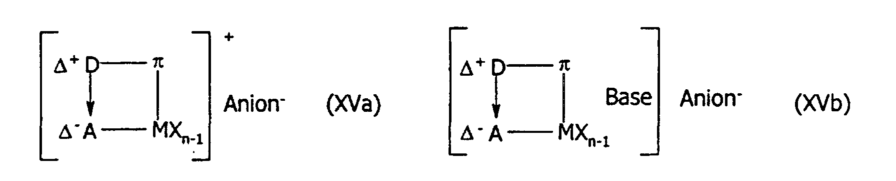 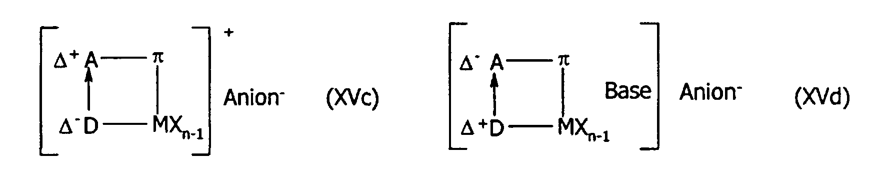 dans lesquelles Anion représente un anion global volumineux, mal coordinnant et
Base représente une base de Lewis.

10. Utilisation des complexes de type π selon les revendications 2, 8 et 9 pour la préparation d'un polyéthylène haute densité, d'un polyéthylène linéaire à basse densité avec du butylène, de l'hexène ou de l'octène en tant que comonomères et de copolymères ternaires.
